(19) Europäisches Patentamt European Patent Office Office européen des brevets

(11) **EP 2 270 491 A1**

(12) **EUROPEAN PATENT APPLICATION**


(43) Date of publication: **05.01.2011 Bulletin 2011/01**

(51) Int Cl.: ***G01N 30/86*** *(2006.01)* ***G01N 27/447*** *(2006.01)*

(21) Application number: **09179242.4**

(22) Date of filing: **15.12.2009**

(84) Designated Contracting States: **AT BE BG CH CY CZ DE DK EE ES FI FR GB GR HR HU IE IS IT LI LT LU LV MC MK MT NL NO PL PT RO SE SI SK SM TR**
Designated Extension States: **AL BA RS**

(30) Priority: **30.06.2009 EP 09164151**
**09.11.2009 EP 09175387**



(71) Applicant: **Molnar, Imre**
**10407 Berlin (DE)**

(72) Inventor: **Molnar, Imre**
**10407 Berlin (DE)**


(54) **Method for analyzing the influence of process parameters on the performance of a chromatographic, electro-chromatographic or electrophoretic measurement and its use**


(57) The invention relates to a method for analyzing the influence of process parameters on the performance of a chromatographic, electro-chromatographic or electrophoretic measurement, wherein an analysis of the correlation between a characteristic of a generated dataset and used process parameters is done by virtually moving in an at least four-dimensional space composed of values of at least three process parameters varied and a value of the characteristic. The invention further relates to a use of said method.


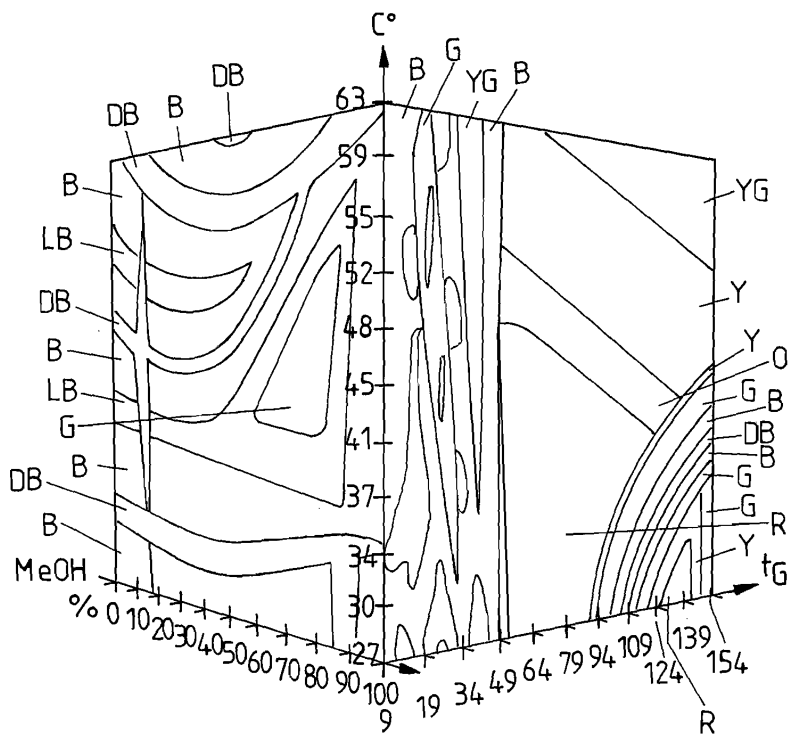


FIG 18B




Printed by Jouve, 75001 PARIS (FR)

## Description

The invention relates to a method for analyzing the influence of process parameters on the performance of a chromatographic, electro-chromatographic or electrophoretic measurement according to the preamble of claim 1 and the use of such method according to the preamble of claim 11.

Recognizing the influence of process parameters on the performance of a measurement is highly important in establishing measurement protocols or in setting up separation methods based on said measurement.

Such measurement may be done by high performance liquid chromatography (HPLC), especially by reversed phase HPLC, the scientific basis of which relies upon the solvophobic theory (Horvath C., Melander W., Molnar I. 1976. Solvophobic interactions in liquid chromatography with nonpolar stationary phases. J Chromatogr. 125(1):129-156).

WO 2005/121776 A1 discloses a method and a device for the automatic development of models of chromatographic, electro-chromatographic or electrophoretic measurements. However, that international patent application is silent about concrete technical measures to be taken when an analysis of more than two process parameters is to be done.

It is an object of the invention to provide a method for concomitantly analyzing the influence of at least three process parameters on the performance of a chromatographic, electro-chromatographic or electrophoretic measurement and provide a use for such a method.

This object is achieved by a method having the features of claim 1. Such a method for analyzing the influence of process parameters on the performance of a chromatographic, electro-chromatographic or electrophoretic measurement comprises the following steps:

a) performing a chromatographic, electro-chromatographic or electrophoretic separation of a sample containing at least two substances, using a set of process parameters;

b) detecting a substance-specific signal of each substance in the sample during the separation, determining a substance-specific retention time and signal intensity, and generating a dataset from said retention time and signal intensity, the dataset being assigned to the analyzed separation and the set of process parameters used,

c) repeating steps a) and b) several times under overall variation of at least three process parameters of the set of process parameters, wherein in each repetition preferably only a single process parameter is varied with respect to a preceding pair of steps a) and b),

d) determining at least one characteristic of said datasets and

e) analyzing the correlation between the characteristic and the process parameters.

The method is **characterized in that** step e) is done by virtually moving in an at least four-dimensional space composed of values of the at least three process parameters varied and a value of the characteristic. By virtually moving in said four-dimensional (or higher dimensional) space, a virtual variation of several (namely at least three) process parameters is achieved at the same time, thus allowing an overwhelmingly fast procedure to go through a high number of datasets.

This effect can be utilized especially advantageous when not only really measured or acquired datasets are analyzed but also calculated datasets. This is, e. g., the case in an embodiment in which step c) is followed by a step c') in which a substance-specific retention time and signal intensity of each substance in the sample is calculated based on the separations already performed. In doing so, a mathematical interpolation method considering non-linear behaviour may be used, like, e. g., factor analysis or principal component analysis. Additionally, a set of virtual process parameters is used. Further, a dataset from said calculated retention time and signal intensity is generated, the dataset being assigned to the virtual set of process parameters used. Finally, step c') is repeated several times under overall variation of at least three process parameters of the set of process parameters, wherein in each repetition preferably only a single process parameter is varied with respect to a preceding step c) or c').

Thus, by such an addition of datasets based on calculated virtual experiments to datasets based on real experiments, the number of datasets to be analyzed can be increased significantly without increasing the experimental efforts. E. g., when varying three process parameters between predefined upper and lower limits with one intermediate measuring point for each process parameter, 27 measurements (each including a separation step, a signal detection step and a dataset generation step), are necessary. These measurements can be performed totally automatic. Starting from these 27 datasets, several hundred thousands datasets can be calculated based on virtual experiments by virtual variation of the process parameters within the predefined limits. The resulting datasets comprise information of several hundred thousands experiments, although only a very small number of 27 had to be done in fact.

All datasets are then represented in an at least four-dimensional space. A four-dimensional space can be, e.

g., a cube in which a colour is assigned to each point or voxel building up said cube. This colour is the forth dimension, whereas the three axes of the cube represent one dimension each. Of course, any other forth dimension can be chosen, like, e. g. greyscale steps. Each point or voxel in this space represents a characteristic of a measured or calculated dataset generated from a measurement under certain process parameters so that the space consists of as many points as datasets were generated from real or virtual experiments.

Suited methods for performing the chromatographic, electro-chromatographic or electrophoretic measurement are, e. g., high performance liquid chromatography (HPLC), reversed phase HPLC, capillary electrophoresis (CE) and capillary electro-chromatography (CEC) as well as high-temperature HPLC.

In an embodiment, the whole respective dataset is presented when a point is selected so that not only the characteristic of the dataset, but the complete dataset is easily available.

In another embodiment, the characteristic is chosen from the group comprising critical resolution of the separation and critical moving peak. The critical resolution Rs,cr of a separation is the resolution of those two adjacent peaks in a dataset which have the smallest distance to each other compared to all other distances of two adjacent peaks in said dataset. In this circumstance, it should be noted that a dataset can be represented as chromatogram or a comparable graphic, wherein due to plotting signal intensity versus retention time a plurality of peaks becomes visible. Only if all peaks are well separated from each other, the substances contained in the analyzed sample can be successfully separated from each other. Thus, the distance between the peaks of a chromatogram is indicative for the performance of the performed separation. If the resolution of two adjacent peaks is higher than 1.5, a so-called baseline separation can be observed. I. e., both peaks are located so far away from each other that there is a section of baseline signal between both peaks. In this case, a separation of the substances being responsible for said peaks is well possible.

The resolution of the separation of two peaks is calculated according to following formula:

$$Rs = \frac{2(t_{r,2} - t_{r,1})}{w_1 + w_2},$$

with $t_{r,2}$ and $t_{r,1}$ being the retention times of two adjacent peaks and $w_1$ and $w_2$ being the widths of those peaks at their respective basis. In other words, the resolution is calculated as the distance of two adjacent peaks divided by the mean value of their widths at their respective basis.

If the critical resolution of a dataset or separation is higher than 1.5, all peaks (and therefore all underlying substances) can be safely separated from each other. The higher the critical resolution of a separation, the better is its performance.

In a further embodiment, the process parameters of the set of process parameters are chosen from the group comprising gradient time, gradient shape (linear or step), pH value of the flow medium (also known as eluent A) and/or the eluent system, temperature during separation, eluent system (e. g. composition of a ternary eluent system; generally a percentage of eluent B in eluent A, in particular wherein eluent A is an aqueous phase and eluent B is an organic phase), column length, inner diameter of the column, particle size of the material the column is packed with, ionic strength of the flow medium, and flow rate.

If more than three process parameters are varied it might be favourable not to consider each process parameter as a single factor but to reduce the number of factors to three, e. g. by an appropriate mathematical method like an order reduction method, to be able to display the data to be evaluated in step e) in a four-dimensional space. Alternatively, process parameters might be simply considered together as being one factor. E. g., instead of considering the temperature and the gradient time as two single factors, both process parameters can be considered as a single factor, namely as a gradient time at a certain temperature. In doing so, simply the variability of the factor "gradient time at a certain temperature" is higher than in case of the factor "gradient time".

In particular technical process parameters like temperature, gradient time, column dimensions (length and/or inner diameter), particle size of the column material, and flow rate are well suited for partial grouping together in order to reduce the number of factors to be represented and evaluated. On the other hand, physicochemical process parameters like pH value, ionic strength and eluent system composition are less well suited to be grouped together.

In another embodiment, step d) is done by analyzing a single dataset at each time. This makes in particular sense if the critical resolution is chosen as characteristic of a dataset, since the critical resolution can be calculated or determined individually for each single dataset and is not dependent on another dataset or chromatogram.

In an alternative embodiment, step d) is done by analyzing at least two datasets in comparison to each other at each time. This makes in particular sense if the critical moving peak is chosen as the characteristic of a dataset. The term "critical moving peak" denotes that peak of a dataset or chromatogram which shows the highest movability of all

peaks, i. e. which has the highest variation or change in its retention time over all datasets or chromatograms examined. Identifying the critical moving peak of a dataset and assigning this peak to a certain substance provides information on which substance of the mixture to be separated has the highest susceptibility to be influenced in its retention behaviour on variations of the process parameters of the separation experiment. This is very helpful information when a mixture of substances is to be separated into individual substances which, when mixed, are usually difficult to separate. By choosing appropriate process parameters, a first substance evoking the critical moving peak of a chromatogram can be shifted away from the other substances and easily separated, whereupon in a next separation step a second substance will evoke the critical moving peak of that chromatogram and will be able to be shifted away from the other substances.

Further, identifying the critical moving peak allows one to circumvent wrong assignments of a peak to a substance. When experiments under defined (e. g. small) variations of process parameters are done, two peaks might change their relative position in a chromatogram unnoticedly. However, if the critical moving peak is determined, chances of noticing such a position change are significantly increased, if one of the peaks is the critical moving peak. Because then attention is drawn to that peak and its high movability in the chromatogram.

In an embodiment, step e) is succeeded by a step f) in which an optimization over all datasets is done. In an embodiment, this optimization is done towards a highest or a lowest value of said characteristic. By such an optimization step, a set of process parameters allowing the best available separation of the sample is easily identifiable. This is in particular true if an optimization towards the critical resolution is done. E. g., taking into account the explanations given above, based on 27 performed and several hundred thousands calculated experiments, the set of optimal process parameters can be found out of all several hundred thousands datasets generated using a comparatively simple optimization function.

In another embodiment, the optimization is performed towards a highest or a lowest value of a specific value of a data pool, wherein the data pool consists of the characteristic and at least one process parameter. The relative weighting of the characteristic and the at least one process parameter used to determine the specific value can be adjusted to the needs of the optimization to be done. Thus, an optimization might be directed towards the lowest possible gradient time at which a critical resolution of $Rs,cr > 1.5$ is achieved, although there might exist process parameters under which a critical resolution of $Rs,cr > 2.3$ could be achieved.

In another embodiment, at least one step of the claimed method, preferably all steps, is/are done automatically. Thus, it is possible that the complete analysis of the influence of process parameters on the performance of the observed measurement is done without human interference. A protocol containing the vertices within which the real and virtual experiments are to be done might be established prior to starting the analysis and might be contained in binary coded instructions readable by an instrument like a computer performing said analysis. Thus, it is possible to automate the claimed method and/or the complete process of establishing a reliable HPLC separation method. In particular, the claimed method can be performed in an automated way or automatically independent on the HPLC device to be used for the separation and allows an automated establishment of a reliable HPLC separation method independent on the HPLC device used for the separation.

The object is also achieved by the use of a method explained above for setting up a set of process parameters to be used in a chromatographic, electro-chromatographic or electrophoretic measurement, wherein the at least one process parameter of the set of process parameters is optimized towards cost and/or time necessary for the measurement and/or environmental burden through substances used for the measurement. E. g., using the shortest gradient time and the lowest flow rate possible to obtain an at least acceptable critical resolution leads to a saving of time and cost due to less work of a technician surveying the experiment and due to less chemicals necessary in each experiment. Thus, the claimed method is well suited to establish measurement protocols allowing savings of resources in afterwards performed real experiments.

In an embodiment, an eluent system is chosen as said process parameter to be optimized and is optimized towards a reduced amount of acetonitrile. This might reduce costs of analytic or preparative experiments to be done, especially when considering the dramatic increase in price of acetonitrile within the last years.

In another embodiment, the use is directed towards an at least partial substitution of acetonitrile by methanol. Methanol is less toxic and much cheaper available than acetonitrile. However, without extensive examination of the substance specific elution or retention behaviour mediated by methanol in comparison to that mediated by acetonitrile, a simple substitution cannot be done due to unforeseeable effects. Using the claimed method will overcome these obstacles.

The invention is further explained in the following in detail by an execution example. In the Figures,

Fig. 1 shows a schematic illustration of the term "Design Space",

Fig. 2 shows a schematic illustration of the conditions of different experiments of a temperature/gradient time study,

Fig. 3 shows four chromatograms obtained under the conditions according to Figure 3,

Fig. 4 shows a schematic illustration of the conditions of different experiments of a temperature/gradient time study under varying ternary eluent and pH conditions,

Fig. 5 shows another schematic illustration of the conditions of different experiments of a temperature/gradient time study under varying ternary eluent and pH conditions,

Fig. 6 shows a screen print of a computer program used for performing the method according to an embodiment,

Fig.7A shows three temperature versus gradient time resolution maps obtained at different pH values using acetonitrile as eluent,

Fig. 7B shows the resolution maps of Figure 7A in a black-and-white depiction,

Fig. 7C shows three temperature versus gradient time resolution maps obtained at different pH values using a 1:1 mixture of acetonitrile and methanol as eluent,

Fig. 7D shows the resolution maps of Figure 7C in a black-and-white depiction,

Fig. 7E shows three temperature versus gradient time resolution maps obtained at different pH values using methanol as eluent,

Fig. 7F shows the resolution maps of Figure 7E in a black-and-white depiction,

Fig. 8A shows a pH versus gradient time resolution map,

Fig. 8B shows the resolution map of Fig. 8A in a black-and-white depiction,

Fig. 9 shows a schematic illustration of the origin of the resolution map shown in Figures 8A and 8B,

Fig. 10A shows a first predicted chromatogram under defined conditions,

Fig. 10B shows an experimental chromatogram using the same conditions as for the chromatogram of Figure 10A,

Fig. 11A shows a second predicted chromatogram under defined conditions,

Fig. 11B shows an experimental chromatogram using the same conditions as for the chromatogram of Figure 11A,

Fig. 12A shows a third predicted chromatogram under defined conditions,

Fig. 12B shows an experimental chromatogram using the same conditions as for the chromatogram of Figure 12A,

Fig. 13A shows a set of temperature versus gradient time resolution maps,

Fig. 13B shows the resolution maps of Figure 13A in a black-and-white depiction,

Fig. 14A shows a forth predicted chromatogram under defined conditions,

Fig. 14B shows an experimental chromatogram using the same conditions as for the chromatogram of Figure 14A,

Fig. 15 shows an array of temperature versus gradient time resolution maps as a simplified depiction of a four dimensional evaluation space,

Fig. 16A shows a fifth predicted chromatogram under defined conditions,

Fig. 16B shows a sixth predicted chromatogram under the same conditions as for the chromatogram of Figure 16A with the exception of a reduced gradient time,

Fig. 17A shows an experimental chromatogram using the same conditions as for the chromatogram of Figure 16A, and

Fig. 17B shows an experimental chromatogram using the same conditions as for the chromatogram of Figure 16B,

Fig. 18A shows an example of a four dimensional evaluation space and

Fig. 18B shows the evaluation space of Figure 13A in a black-and-white depiction.

The retention time of a particular substance in a chromatographic analysis is dependent on a number of experimental variables, namely temperature (T), pH value, gradient time ($t_G$ or tG), gradient shape (linear or step), ternary eluent composition (% B), ionic strength, column dimensions (length and inner diameter of the separation column), particle size of the column material, and flow rate (F).

In order to achieve acceptable separation between the peaks of a chromatogram in a robust experimental region, the influence of all these parameters and their combination must be assessed. This procedure is known as defining the design space of a method.

Figure 1 shows a schematic illustration for the graphical explanation of the term "design space". The black ball in the centre of the cube depicted in Figure 1 exemplarily shows one set of parameters chosen from the variables referred to above. The planes depicted in Figure 1 exemplarily illustrate some of these variables. Due to the large number of variables, drawing a complete illustration of a design space afforded more dimensions as used in Figure 1. Thus, the depiction of Figure 1 is only a simplified illustration of a real design space.

In this example, the computer simulation software DryLab (Molnár Institute, Berlin, Germany) is used to first explore the design space and then to find the optimal working point within it. In doing so, a robust and reliable method for the separation of nine pharmaceutical compounds and their derivatives could be found.

For obtaining experimental chromatographic results, HPLC separations were performed on a Shimadzu LC2010-C device with an integrated 4-liquid gradient system, a high-speed and cooled autosampler, a temperature-controlled column compartment and a Shimadzu UV-VIS detector. ACE C18 (150 x 4.6 mm, 3 μm) columns provided by HiChrom were used as separation columns. For obtaining predicted or calculated chromatograms, modelling was carried out using DryLab 2010 plus version 4.0 (Molnár Institute).

In more detail, the experimental set up can be summarized as follows:

- Eluent Data: Flow rate: 0.8 ml/min

  Eluent A: water, 50 mM phosphate buffer, different pH values
  Eluent B: different organic solvents

- Extra Column Volume: Injection Volume [μl]: 5

  Volume of Capillaries [μl]: 10
  Volume of Detector Cell [μl]: 5

- Instrument Data: Dwell Volume [ml]: 1.06

  Extra Column Volume [ml]: 0.016
  Detector Wavelength [nm]: 254

The nine compounds which were used in for separation purposes are listed in the following table 1:

| Abbreviation | Name | Reaction Behaviour | Structure |
|---|---|---|---|
| MHPA | m-Hydroxyphenylacetic acid | acidic | 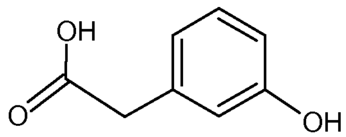 |
| PHPA | p-Hydroxyphenylacetic acid | acidic | 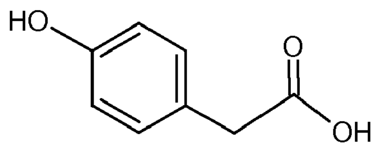 |

(continued)

| Abbreviation | Name | Reaction Behaviour | Structure |
|---|---|---|---|
| BZA | Benzyl alcohol | neutral | 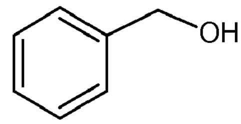 |
| PHS | Phthalic acid | acidic | 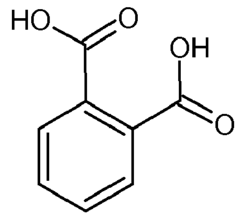 |
| IVA | Isovanillic acid (3-Hydroxy-4-methoxy benzoic acid) | acidic | 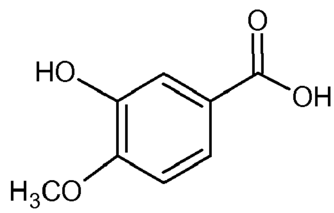 |
| VA | Vanillic acid (4-Hydroxy-3-methoxy benzoic acid) | acidic | 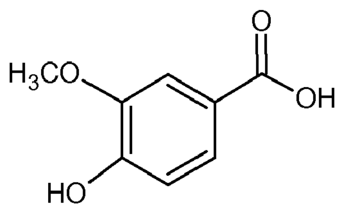 |
| DLM | DL-mandelic acid | acidic | 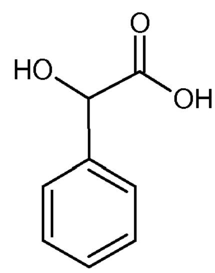 |
| PARAC | Paracetamol | neutral | 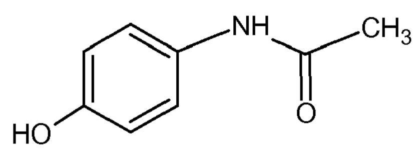 |
| HMBA | 4-Hydroxy-3-methoxy benzyl alcohol | neutral | 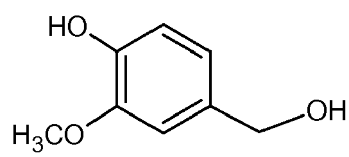 |

These nine substances were mixed together and applied to a HPLC column in order to separate them again

by HPLC. In doing so, the optimum conditions for maximum separation of the compounds should be determined. Further, a design space should be designed and transformed into a knowledge space.

A preliminary evaluation determined that the most influential experimental variables on critical resolution were gradient time ($t_G$), pH value, (ternary) eluent composition, and temperature (T). The term "critical resolution" defines the resolution which is achieved in separating the so-called critical peak pair, i.e. the two peaks of the chromatogram which are closest to each other (see also above).

A set of experiments was designed to enable the simultaneous evaluation and optimization of these four most influential experimental variables or critical parameters. Flow rate, gradient shape and column dimensions were posteriorly optimized within DryLab with retention of selectivity.

Each set of experiments comprised a "temperature/gradient time ($t_GT$) study" in which the temperature and the gradient time were altered. This is schematically shown in Figure 2. Each point on the edges of the square of Figure 2 indicates a single experiment under distinct conditions. The upper left point illustrates an experiment which was done at 60 ˚C and a gradient time of 30 minutes. During this gradient time, the amount of eluent B was raised from 0 % to 100 % (all percentages given with respect to gradients are to be understood as percentages by volume). The upper right point indicates an experiment at 60 ˚C and a gradient time of 90 minutes, whereas the lower left and right points indicate experiments at 30 ˚C and a gradient time of 30 minutes or 90 minutes, respectively.

Figure 3 shows according chromatograms of separation experiments performed under the conditions explained with respect to Figure 2. Each chromatogram was obtained using conditions corresponding to that point in Figure 2 arranged accordingly (upper left/upper left; lower right/lower right etc.). The distinct conditions can also be seen from the headers of the chromatograms. The influence of the differences in temperature and/or gradient time on the separation success can be clearly seen from the different quality of the peak separations.

Nine sets of experiments were carried out for three different (ternary) eluent compositions at three different pH values. This is schematically illustrated in Figure 4. Each point in Figure 4 illustrates a set of experiments each consisting of four experiments. The conditions of these four experiments are identical to those explained with respect to Figures 2 and 3:

- 30 minutes gradient time at 30 ˚C
- 30 minutes gradient time at 60 ˚C
- 90 minutes gradient time at 30 ˚C
- 90 minutes gradient time at 60 ˚C

As can be seen from Figure 4, these four experiments were carried out at pH 2.4, pH 3.0 and pH 3.6 using an eluent B consisting of 100 % methanol, of a mixture of 50 % methanol and 50 % acetonitrile, or of 100 % acetonitrile, resulting in 36 individual experiments.

This experimental design is further shown in Figure 5 which illustrates the 36 experiments in another way.

The results of those 36 experiments were provided to the software DryLab using the software PeakMatch (both of Molnár Institute) and were used to generate 9 resolution maps, one for each temperature-versus-gradient-time area at a distinct pH value and at a distinct eluent composition. A typical resolution map together with a single chromatogram is shown in Figure 6. Figure 6 is a screen print from the software DryLab.

Each resolution map corresponds to one of the nine planes indicated in the depiction of Figure 5. Each resolution map indicates the critical resolution of a chromatogram obtained at defined conditions. As stated above, the pH value and the eluent composition are invariable for a certain resolution map, whereas the gradient time and the temperature are variable within a certain resolution map. By virtually moving on the resolution map, gradient time and/or temperature may be virtually altered.

Each point on the surface of the resolution map corresponds to a chromatogram obtained at a defined pH value, a defined eluent composition, a defined temperature and a defined gradient time. However, only 4 chromatograms of each resolution map were actually obtained experimentally. All other chromatograms were calculated based on the information on chromatographic alterations due to condition variations. Thus, the experimental effort in obtaining according resolution maps is decreased significantly by the used software.

To draw such a resolution map, a colour is assigned to the critical resolution of each spectrum. In the instant example, purple is assigned to a very low critical resolution, blue is defined to a low critical resolution, green is assigned to a medium critical resolution, yellow to an elevated critical resolution, orange to an even higher critical resolution and red to a very high critical resolution. Intermediate colours are assigned to intermediate critical resolutions in each case.

This colour scheme cannot directly be seen from Figure 6 since this Figure had to be depicted in greyscale for technical reasons. The three broad lines on the left side and the one broad line on the right side of the resolution map of Figure 6 are originally purple or dark blue areas indicating a low critical resolution. The cursor cross line is placed at an originally orange to red area of the resolution map, indicating a rather high critical resolution. Thus, the chromatogram depicted in Figure 6 below the resolution map is a chromatogram having a rather high critical resolution, i. e. a chromatogram in which all peaks are separated already well from each other.

Figure 7A depicts three resolution maps corresponding to separations with acetonitrile as eluent. Further, the upper resolution map corresponds to separations performed at pH 3.6, the middle resolution map corresponds to separations performed at pH 3.0 and the lower resolution map corresponds to separations performed at pH 2.4. Like in Figure 6, the greyscale depiction is due to technical reasons only. To allow an easier identification of the original colours of the resolution map, Figure 7B shows the same resolution maps as Figure 7A in a black-and-white depiction, indicating the original colours.

In this circumstance, "P" denotes purple, "DB" denotes dark blue, "B" denotes blue, "LB" denotes light blue, "G" denotes green, "Y" denotes yellow, "O" denotes orange and "R" denotes red. Intermediate colours are expressed as mixed denotations like, e. g. "YO" for yellow to orange or "BG" for blue to green.

The respective highest critical resolutions of 0.84, 1.31 and 1.25 of each resolution map are indicated in Figure 7A. As is obvious from the above explanations, these highest values can be found in orange areas of the resolution maps.

Figure 7C depicts three resolution maps corresponding to separations with a 50:50 mixture of acetonitrile and methanol as eluent. Further, the upper resolution map corresponds to separations performed at pH 3.6, the middle resolution map corresponds to separations performed at pH 3.0 and the lower resolution map corresponds to separations performed at pH 2.4. Like in Figures 6 and 7A, the greyscale depiction is due to technical reasons only. To allow an easier identification of the original colours of the resolution map, Figure 7D shows the same resolution maps as Figure 7C in a black-and-white depiction, indicating the original colours. The same colour denotation scheme like in Figure 7B was used.

The respective highest critical resolutions of 1.51, 1.85 and 1.63 of each resolution map are indicated in Figure 7C. As is obvious from the above explanations, these highest values can be found in orange or red areas of the resolution maps. The highest critical resolutions achieved with this eluent composition are in each case better than those achieved with acetonitrile as eluent.

Figure 7E depicts three resolution maps corresponding to separations with methanol as eluent. Further, the upper resolution map corresponds to separations performed at pH 3.6, the middle resolution map corresponds to separations performed at pH 3.0 and the lower resolution map corresponds to separations performed at pH 2.4. Like in Figures 6, 7A and 7C, the greyscale depiction is due to technical reasons only. To allow an easier identification of the original colours of the resolution map, Figure 7F shows the same resolution maps as Figure 7E in a black-and-white depiction, indicating the original colours. The same colour denotation scheme like in Figures 7B and 7D was used.

The respective highest critical resolutions of 1.63, 2.44 and 1.77 of each resolution map are indicated in Figure 7E. As is obvious from the above explanations, these highest values can be found in orange or red areas of the resolution maps. The highest critical resolutions achieved with this eluent composition are in each case better than those achieved with acetonitrile or with a 50:50 mixture of acetonitrile and methanol as eluent.

The highest observed critical resolutions for each eluent system and pH value are also listed in the following table 2:

| Eluent composition | pH value | Critical resolution |
|---|---|---|
| Acetonitrile | 2.4 | 1.25 |
| Acetonitrile | 3.0 | **1.31** |
| Acetonitrile | 3.6 | 0.84 |
| Acetonitrile:Methanol (50:50) | 2.4 | 1.63 |
| Acetonitrile:Methanol (50:50) | 3.0 | **1.85** |
| Acetonitrile:Methanol (50:50) | 3.6 | 1.51 |
| Methanol | 2.4 | 1.77 |
| Methanol | 3.0 | **2.44** |
| Methanol | 3.6 | 1.63 |

As can be seen from table 2, the highest critical resolution could in each eluent system be observed at pH 3.0 (values indicated in bold type). This result is also derivable from a resolution map in which pH value is plotted versus gradient time. Such a resolution map is depicted in Figure 8A. The dashed line drawn at pH 3.0 crosses the single originally red area of this resolution map. Figure 8A is depicted in greyscale for technical reasons only. To allow a better identification of the original colours of the resolution map of Figure 8A, Figure 8B indicates a black-and-white depiction of this resolution map, wherein the original colours are indicated. The same colour denotation scheme like in Figures 7B, 7D and 7F was used.

Figure 9 shows a schematic depiction of a temperature-pH-gradient-time space to illustrate the origin of the resolution map of Figures 8A and 8B. Thus, this resolution map represents the critical resolution of a plurality of chromatograms obtained (experimentally or by calculation) at a distinct temperature.

Figures 10A to 12B illustrate the reliability of the chromatogram calculation method used in this example.

Figure 10A shows a predicted (calculated) chromatogram of a separation run at pH 3.0, a temperature of 29 ˚C, a gradient time of 57 minutes and with acetonitrile as eluent. Figure 10B shows an experimental chromatogram using the same conditions. The critical resolution in each case is 1.31.

Figure 11A shows a predicted (calculated) chromatogram of a separation run at pH 3.0, a temperature of 45 ˚C, a gradient time of 153 minutes and with a 50:50 mixture of acetonitrile and methanol as eluent. Figure 11B shows an experimental chromatogram using the same conditions. The critical resolution in each case is 1.85.

Figure 12A shows a predicted (calculated) chromatogram of a separation run at pH 3.0, a temperature of 27 ˚C, a gradient time of 74 minutes and with methanol as eluent. Figure 12B shows an experimental chromatogram using the same conditions. The critical resolution in each case is 2.44.

In each case, there are only negligible differences between the calculated and the experimental chromatograms. Thus, basing the evaluation method of this example on resolution maps consisting partly of experimental data but mainly of calculated data is a highly reliably, easy as well as cost and time saving way.

The highest critical resolution observed so far in this example is 2.44 in case of working at pH 3.0, at a temperature of 27 ˚C, at a gradient time of 74 minutes and with methanol as eluent (cf. middle resolution map of Figures 7E and 7F, table 2 and Figures 12A and 12B).

However, this result is to be further optimized by a method as already explained herein above. In doing so, the three-dimensional space used hitherto is left in favour of a four-dimensional space. This four dimensional space can be exemplarily illustrated as a cubic space defined by the three outer axes temperature, gradient time and eluent composition and consisting of a plurality of data points, the values of which define the forth dimension. Instantly, this forth dimension is the critical resolution of chromatograms which is represented by a certain colour. Alternatively, it could also be represented by a numeric value or any other suited coding value. This cubic four-dimensional evaluation space might be construed by an appropriate cubic spline interpolation of according datasets.

By virtually moving in said forth dimensional space, "red" regions indicating a very high critical resolution of the underlying chromatogram can be found which regions were hidden so far from the scientist when using prior art methods of chromatogram evaluation. This is mainly true because by working in a three-dimensional space the "best" three-dimensional space (covering the chromatogram with the highest critical resolution) had to be found. This, however, afforded a time consuming sequential data evaluation process which is now superfluous when working in a four-dimensional space.

In order to graphically illustrate the cubical four-dimensional evaluation space used in this example, Figure 13A shows individual "slices" out of this evaluation space for separations performed at pH 3.0 at varying temperatures, varying gradient times and a varying eluent composition. The depiction of slices instead of a cubical four-dimensional evaluation space is chosen for easier graphical representation only. Putting these slices (or resolution maps) together will result in a four-dimensional space, a so-called design space or evaluation space.

Each slice represents a single resolution map. In the lowest resolution map of Figure 13A, 100 % acetonitrile is used as eluent. In the resolution maps arranged above the lowest resolution map, the concentration of methanol in the eluent is increased. In the topmost resolution map, the eluent consists of 100 % methanol.

Since also Figure 13A had to be depicted in greyscale for technical reasons, Figure 13B illustrates the same resolution maps like Figure 13A, but in a black-and-white depiction, indicating the original colours. The same colour denotation scheme like in Figures 7B, 7D, 7F and 8B was used.

As can be seen from Figures 13A and 13B, the spatial amount of "red" regions indicating conditions resulting in a high critical resolution of according chromatograms first increases with increasing methanol concentration but then decreases again with further increasing methanol concentration.

An optimum can be found in the resolution map comprising chromatograms obtained at an acetonitrile to methanol ratio of 25 to 75. This resolution map is also depicted enlarged in Figures 13A and 13B. It contains a chromatogram having a critical resolution of 2.67, namely at a temperature of 42 ˚C and a gradient time of 120 minutes.

Once again it is to be pointed out that the "slices" of the four-dimensional evaluation space of Figures 13A and 13B are only shown for explanation reasons. In fact, the evaluation was not done by using such slices, but by virtually moving in the four-dimensional evaluation space Thus, a continuous four-dimensional evaluation space was used and not a number of discrete three- or two-dimensional evaluation sub-spaces.

To illustrate once again the reliability of the chromatogram calculation method used in this example, Figures 14A and 14B show predicted (Figure 14A) and experimental (Figure 14B) chromatograms of a separation under the best possible conditions (pH 3.0, 42 ˚C, 120 minutes gradient time and a 25:75 mixture of acetonitrile and methanol as eluent) determined by the previous step. Comparable to Figures 10A to 12B, also in case of these chromatograms only very slight deviations between the experimental and the predicted chromatogram are observable.

The following table 3 lists the retention times of the observed peaks in both the predicted and the experimental chromatogram together with the difference between the experimental and the predicted value as well as the resulting

error. This table further indicates an assignment of the observed peaks to the separated substances of the mixture used for the separation run.

| Substance | Experimental Retention Time / min | Predicted Retention Time / min | Difference / min | % error |
|---|---|---|---|---|
| UK1 | 2.360 | 2.360 | 0.000 | 0.00 |
| UK2 | 6.856 | 6.791 | 0.065 | 0.96 |
| PARAC | 12.851 | 12.808 | 0.043 | 0.34 |
| HMBA | 15.403 | 15.174 | 0.229 | 1.51 |
| DLM | 16.122 | 16.015 | 0.107 | 0.67 |
| PHS | 17.784 | 17.611 | 0.173 | 0.98 |
| PHPA | 19.906 | 19.830 | 0.076 | 0.38 |
| VA | 21.130 | 21.085 | 0.045 | 0.21 |
| MHPA | 22.288 | 22.143 | 0.145 | 0.65 |
| IVA | 23.051 | 23.010 | 0.041 | 0.18 |
| HMBA (degraded) | 24.405 | 24.219 | 0.186 | 0.77 |
| UK3 | 27.703 | 27.656 | 0.047 | 0.17 |
| BZA (degraded) | 31.939 | 31.878 | 0.061 | 0.19 |
| BZA | 34.522 | 34.403 | 0.119 | 0.35 |

"UK" denotes an unknown compound.

As can be seen from the values listed in Table 3, the differences between predicted and experimental retention times are very small, namely below 1 % in each case.

Figure 15 shows an array of resolution maps as a simplified graphical representation of a four-dimensional evaluation space. The single resolution maps are again to be seen as individual slices of a continuous evaluation space. In each resolution map temperature is plotted versus gradient time, wherein the levels of grey indicate the critical resolution of each chromatogram at the respective temperature/gradient time value.

Originally, different colours were used in the resolution maps of Figure 15 to indicate the critical resolutions of the individual chromatograms being represented by the resolution maps. Since Figure 15 is depicted in greyscale for technical reasons, the areas of a high critical resolution are more difficult to identify for the human eye than this is possible when colours are used. Nonetheless, the greyscale used in Figure 15 is also an appropriate forth dimension, in particular when using a non-human evaluation aid like a computer.

The resolution maps of Figure 15 are ordered in such a way that the pH value decreases from left to right from pH 3.0 to pH 2.4 in steps of pH 0.1 (i. e., in the first column from left, all chromatograms were measured or calculated at pH 3.0, whereas the pH value was 2.9 in all experiments depicted in the second column from left, 2.8 in all experiments depicted in the third column from left, 2.7 in all experiments depicted in the forth column from left, 2.6 in all experiments depicted in the fifth column from left, 2.5 in all experiments depicted in the sixth column from left and 2.4 in the last column from left). The chromatographic separations, the results of which are depicted in Figure 15, were done in order to further optimize the resolution efficacy with respect to pH value.

The resolution maps of Figure 15 are further ordered in such a way that the ternary eluent composition varies from the bottom to the top row of the array of resolution maps. In the bottom row, all experiments were measured or calculated at 0 % methanol and 100 % acetonitrile as eluent, whereas in the top line, 100 % methanol and 0% acetonitrile were used as eluent. The amount of methanol increases from the bottom to the top line in steps of 5 %, whereas the amount of acetonitrile concomitantly decreases from 100 % to 0 % in steps of 5 %.

The resolution maps having the biggest "red" areas (indicating the highest resolution of the respective chromatograms) can be found in the upper region of the first column at conditions of pH 3.0 and an eluent composition of 70 to 100 % methanol and 30 to 0 % acetonitrile. The achieved resolutions at pH 2.9 and pH 2.6 are much worse, whereas the resolutions achieved at other pH values partly are also acceptable dependent on the actual ternary eluent composition.

The resolution map containing the highest critical resolution of all experiments done or calculated is marked with a circle in Figure 15. Conditions of pH 3.0, an eluent composition of 75 % methanol and 25 % acetonitrile, a temperature of 42 °C and a gradient time of 120 minutes led to the best critical resolution of 2.67. Thus, the further pH optimization did not result in a higher resolution as compared to the conditions already been found with the previous experiments (cf. Figures 13A and 13B).

To generate a fast as well as robust method, the final step of the optimizing process was to reduce the total

run time. Currently, the best conditions were

**a)** pH 3.0, 100 % methanol, 27 ˚C and a gradient time of 74 minutes (critical resolution of 2.44; cf. Figures 7E and 7F)
**b)** pH 3.0, 75 % methanol, 25 % acetonitrile, 42 ˚C and a gradient time of 120 minutes (critical resolution of 2.67; cf. Figures 13A, 13B and 15).

Thus, although the critical resolution of conditions a) is not as good as that of conditions b), the total gradient time is much less.

By increasing the flow rate by a factor of 1.5 but leaving the other parameters of conditions a) unchanged, neither selectivity nor critical resolution was influenced. This predicted result could be proven by an experiment. Figures 16A and 16B show excerpts of the predicted chromatograms of separations having a gradient time of 74 minutes (Figure 16A; the retention time is shown over a range of 30 minutes) or 49.33 minutes (Figure 16B the retention time is shown over a range of 20 minutes). Figures 17A and 17B show the experimental chromatograms of separations having a gradient time of 74 minutes (Figure 17A; the retention time is shown over a range of 30 minutes) or 49.33 minutes (Figure 17B; the retention time is shown over a range of 20 minutes).

This process of retention time optimization can also be done using a four dimensional evaluation space as described above. Summarizing, in the explained example, the effect of different separation conditions considering four influential variables on the critical resolution and therefore the method success was assessed and run time was minimized. The assessment was carried out in such a way as to vary simultaneously all four parameters enabling to take into account the interaction between these variables. It was possible to define and visualize the design space, as well as apply it to help finding the optimum working conditions both from a robustness and from a critical resolution point of view.

Figure 18A shows an example of a four dimensional evaluation space which can be obtained by putting the individual middle resolution maps or slices of Figures 7A to 7F (pH 3.0) and 13A as well as further "slices" together. This evaluation is comparable to such an evaluation space that could be obtained by putting the individual resolution maps of Figure 15 together. The three axes of this evaluation space are the amount of methanol in the ternary eluent composition (0 % to 100 %), the gradient time (9 minutes to 154 minutes) and the temperature (27 ˚C to 63 ˚C). The forth dimension is the critical resolution coded by the colour scheme already explained above.

Since also Figure 18A is depicted in greyscale for technical reasons, an according black-and-white depiction of the evaluation space is illustrated in Figure 18B in which the original colours are indicated using the same colour denoting scheme as above.

The cross line is set in a robust region of the evaluation space indicating conditions under which a good critical resolution is achieved. As already explained above, these conditions could be found at a gradient time of 74 minutes, a methanol content of 100 % and a temperature of 27 ˚C. The further optimization of these conditions in favour of an even better critical resolution accepting a longer gradient time (as explained above) can be done in this evaluation space according to the method explained herein.

## Claims

1. Method for analyzing the influence of process parameters on the performance of a chromatographic, electro-chromatographic or electrophoretic measurement, comprising the following steps:

a) performing a chromatographic, electro-chromatographic or electrophoretic separation of a sample containing at least two substances, using a set of process parameters,
b) detecting a substance-specific signal of each substance in the sample during the separation, determining a substance-specific retention time and signal intensity, and generating a dataset from said retention time and signal intensity, the dataset being assigned to the analyzed separation and the set of process parameters used,
c) repeating steps a) and b) several times under overall variation of at least three process parameters of the set of process parameters, wherein in each repetition preferably only a single process parameter is varied with respect to a preceding pair of steps a) and b),
d) determining at least one characteristic of said datasets,
e) analyzing the correlation between the characteristic and the process parameters,

**characterized**
**in that** step e) is done by virtually moving in an at least four-dimensional space composed of values of the at least three process parameters varied and a value of the characteristic.

2. Method according to claim 1, **characterized in that** step c) is followed by a step c') in which

● a substance-specific retention time and signal intensity of each substance in the sample is calculated based on the separations already performed, virtually using a set of process parameters,
● a dataset from said calculated retention time and signal intensity is generated, the dataset being assigned to the set of process parameters virtually used, and
wherein step c') is repeated several times under overall variation of at least three process parameters of the set of process parameters, wherein in each repetition preferably only a single process parameter is varied with respect to a preceding step c) or c').

**3.** Method according to claim 1 or 2, **characterized in that** the characteristic is chosen from the group comprising critical resolution of the separation and critical moving peak.

**4.** Method according to any of the preceding claims, **characterized in that** the process parameters of the set of process parameters are chosen from the group comprising gradient time, gradient form, pH value, temperature, composition of an eluent system, column length, inner diameter of the column, particle size of column material, ionic strength and flow rate.

**5.** Method according to any of the preceding claims, **characterized in that** step d) is done by analyzing a single dataset at each time.

**6.** Method according to any of the preceding claims, **characterized in that** step d) is done by analyzing at least two datasets in comparison to each other at each time.

**7.** Method according to any of the preceding claims, **characterized in that** step e) is succeeded by a step f) in which an optimization over all datasets is done.

**8.** Method according to claim 7, **characterized in that** the optimization is done towards a highest or a lowest value of said characteristic.

**9.** Method according to claim 7, **characterized in that** the optimization is done towards a highest or a lowest value of a specific value of a data pool, wherein the data pool consists of values of the characteristic and of values of at least one process parameter of the set of process parameters.

**10.** Method according to any of the preceding claims, **characterized in that** at least one step, preferably all steps, is/are done automatically.

**11.** Use of a method according to any of the preceding claims for setting up a set of process parameters to be used in a chromatographic, electro-chromatographic or electrophoretic measurement, wherein at least one process parameter of the set of process parameters is optimized towards cost and/or time necessary for the measurement and/or environmental burden through substances used for the measurement.

**12.** Use according to claim 11, **characterized in that** an eluent system is chosen as said process parameter and is optimized towards a reduced amount of acetonitrile.

**13.** Use according to claim 12, **characterized in that** acetonitrile is at least partially substituted by methanol.

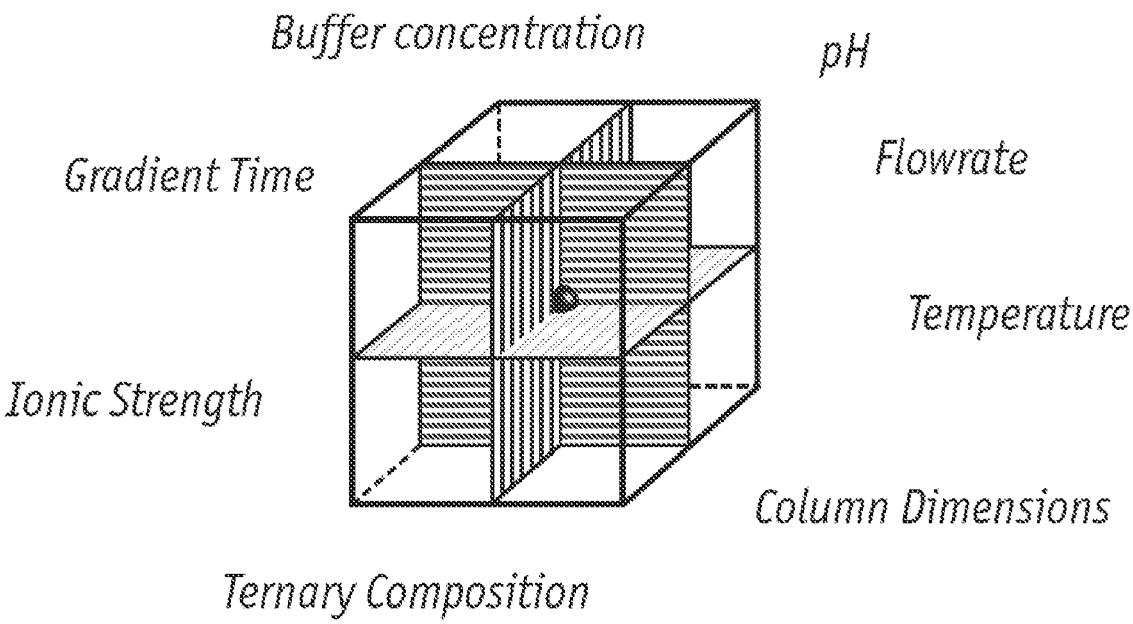
Buffer concentration
pH
Gradient Time
Flowrate
Temperature
Ionic Strength
Column Dimensions
Ternary Composition

FIG. 1

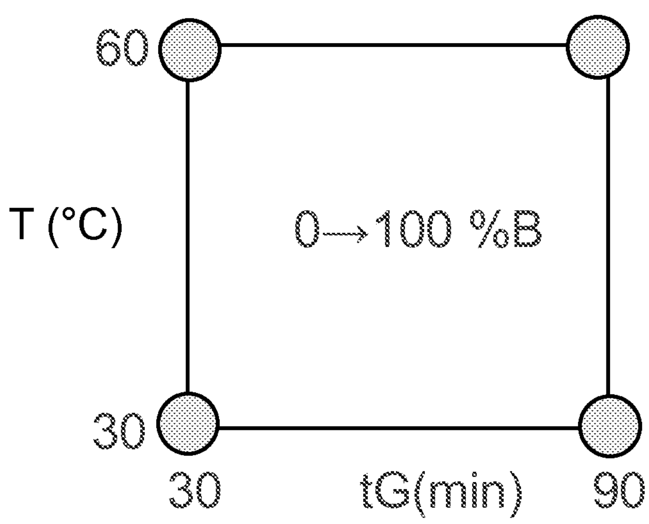
60
T (°C)
0→100 %B
30
30
tG(min)
90

FIG. 2

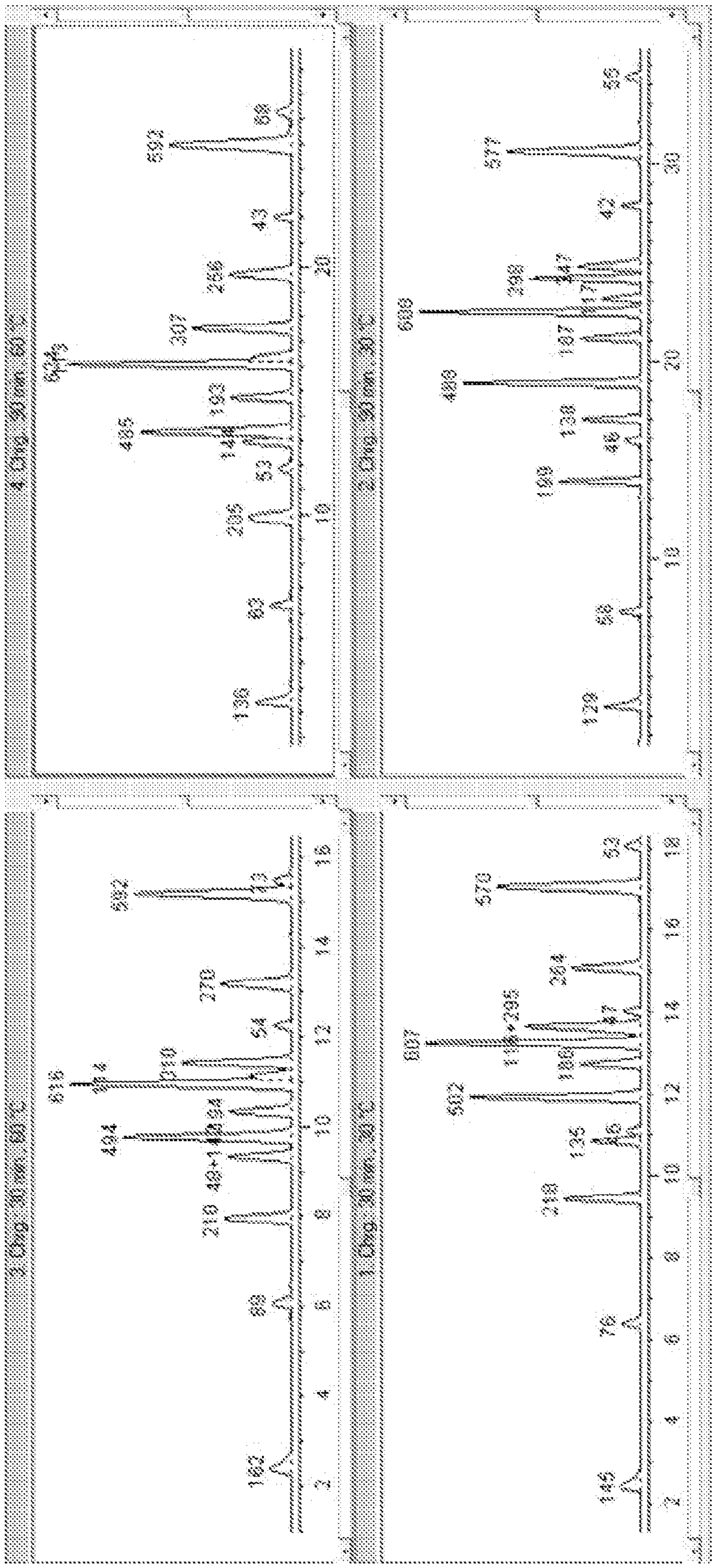

FIG. 3

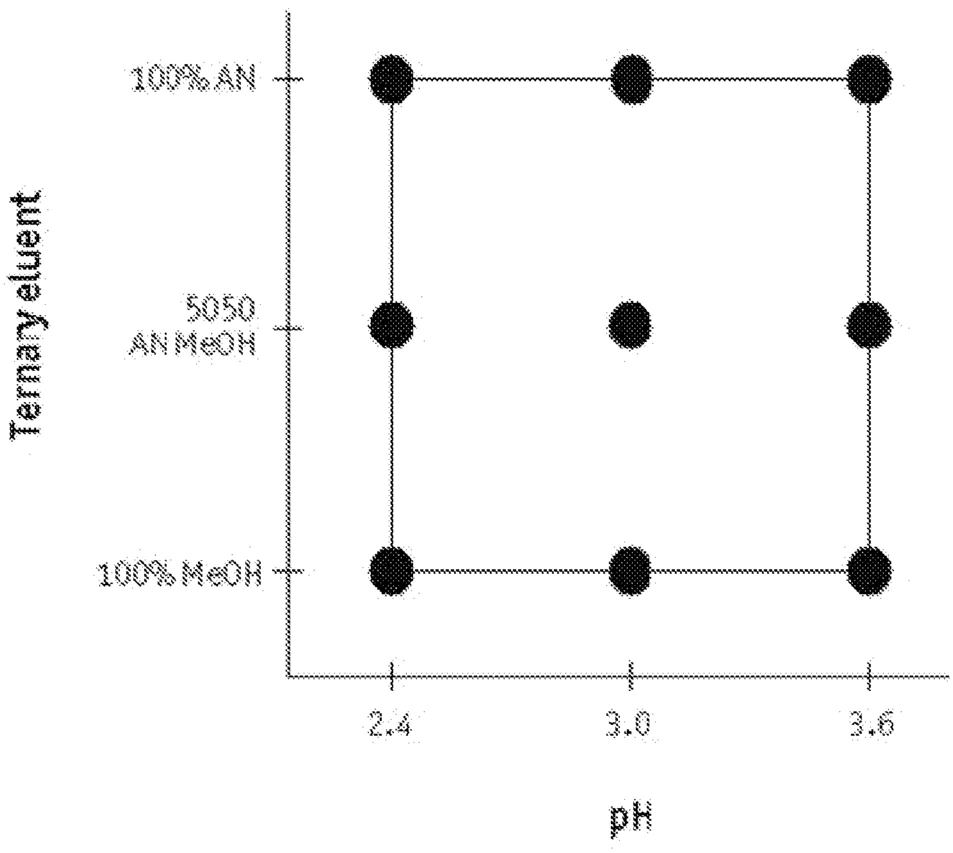


FIG. 4

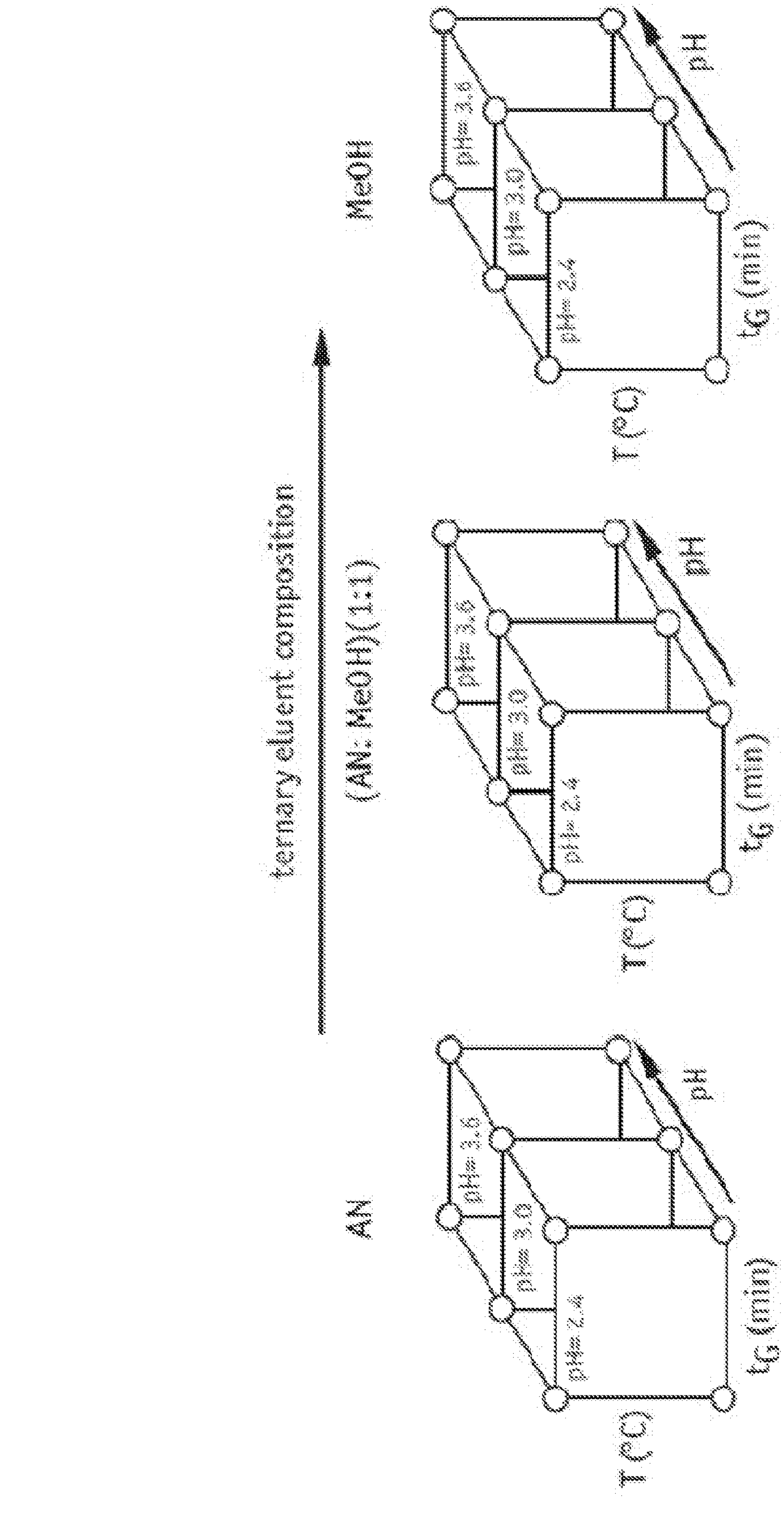
AN
ternary eluent composition
(AN: MeOH)(1:1)
MeOH
T (°C)
tG (min)
pH
pH= 2.4
pH= 3.0
pH= 3.6

FIG. 5

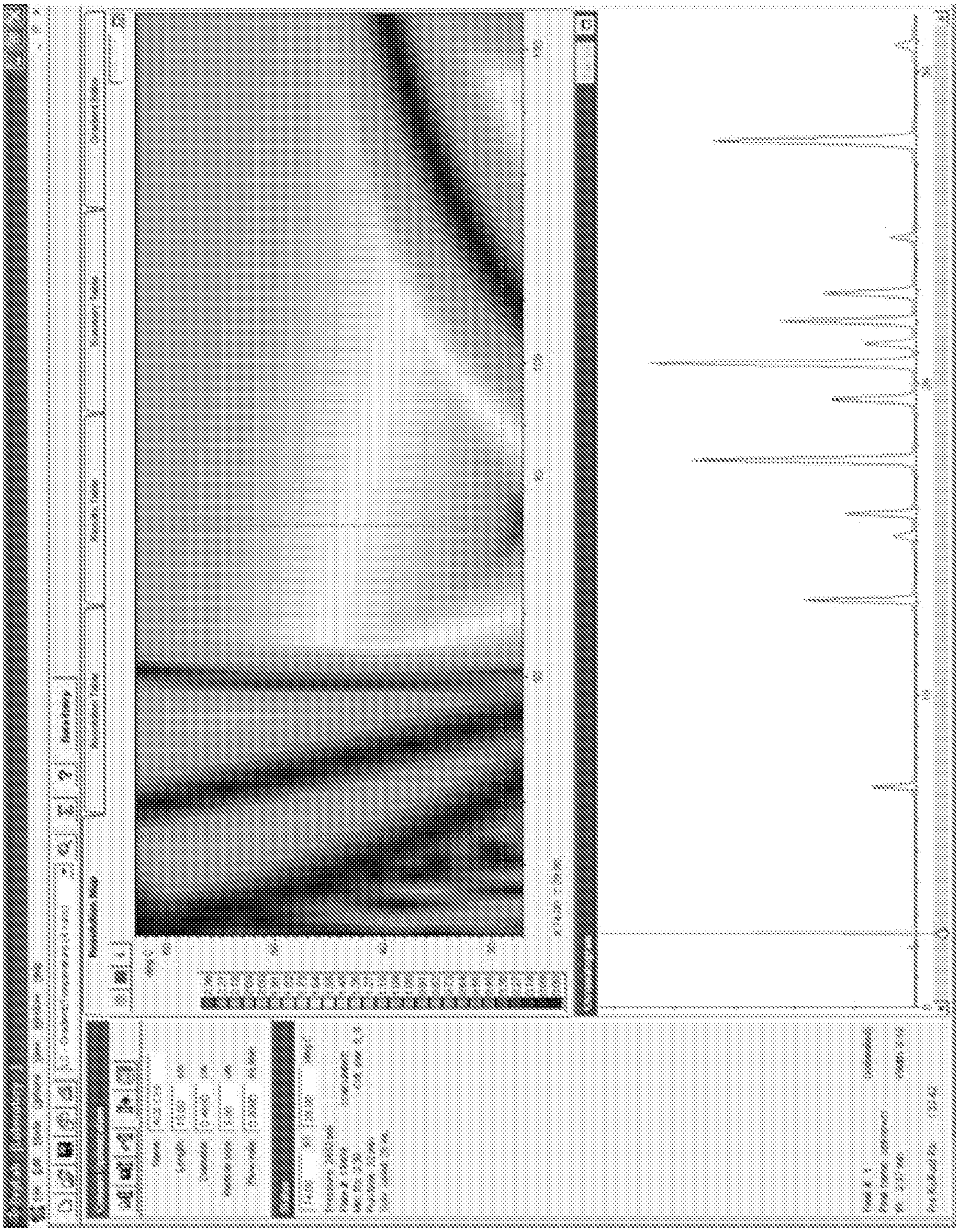

FIG. 6

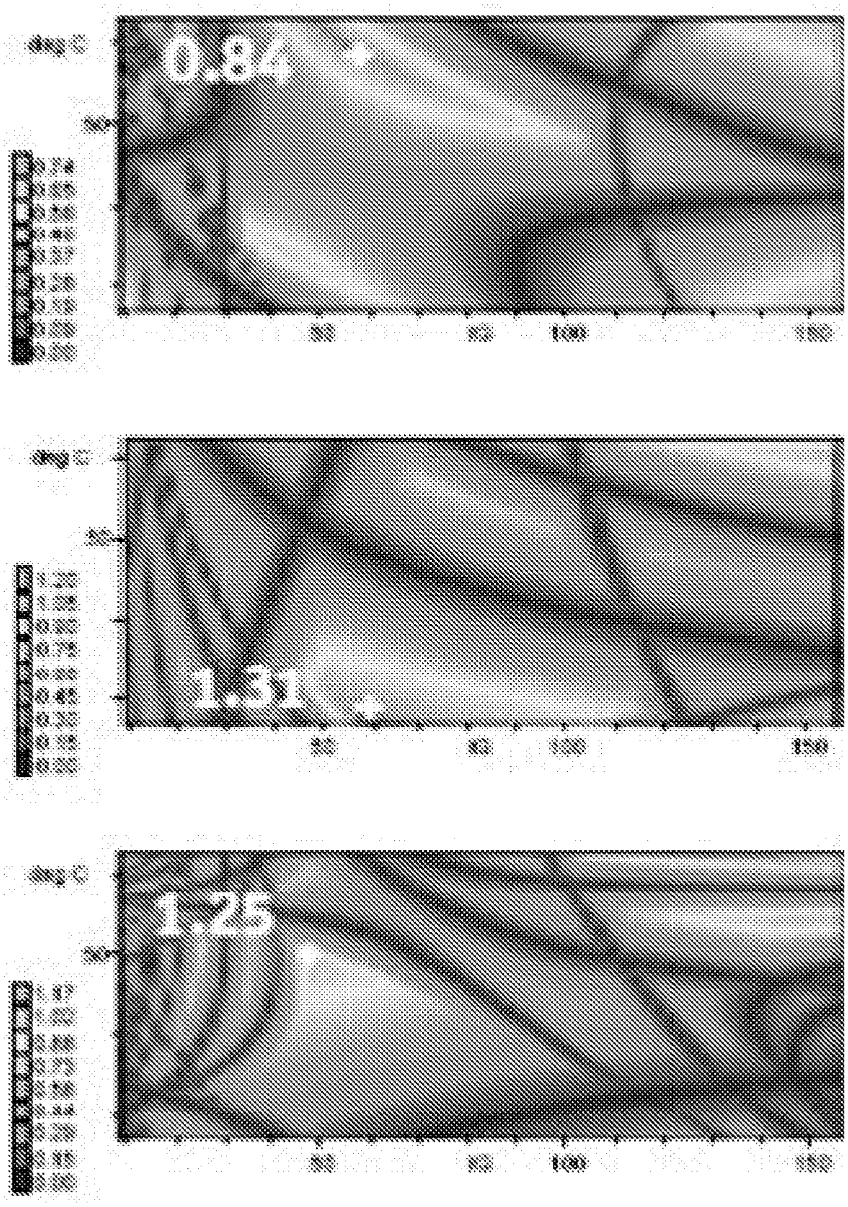


FIG. 7A

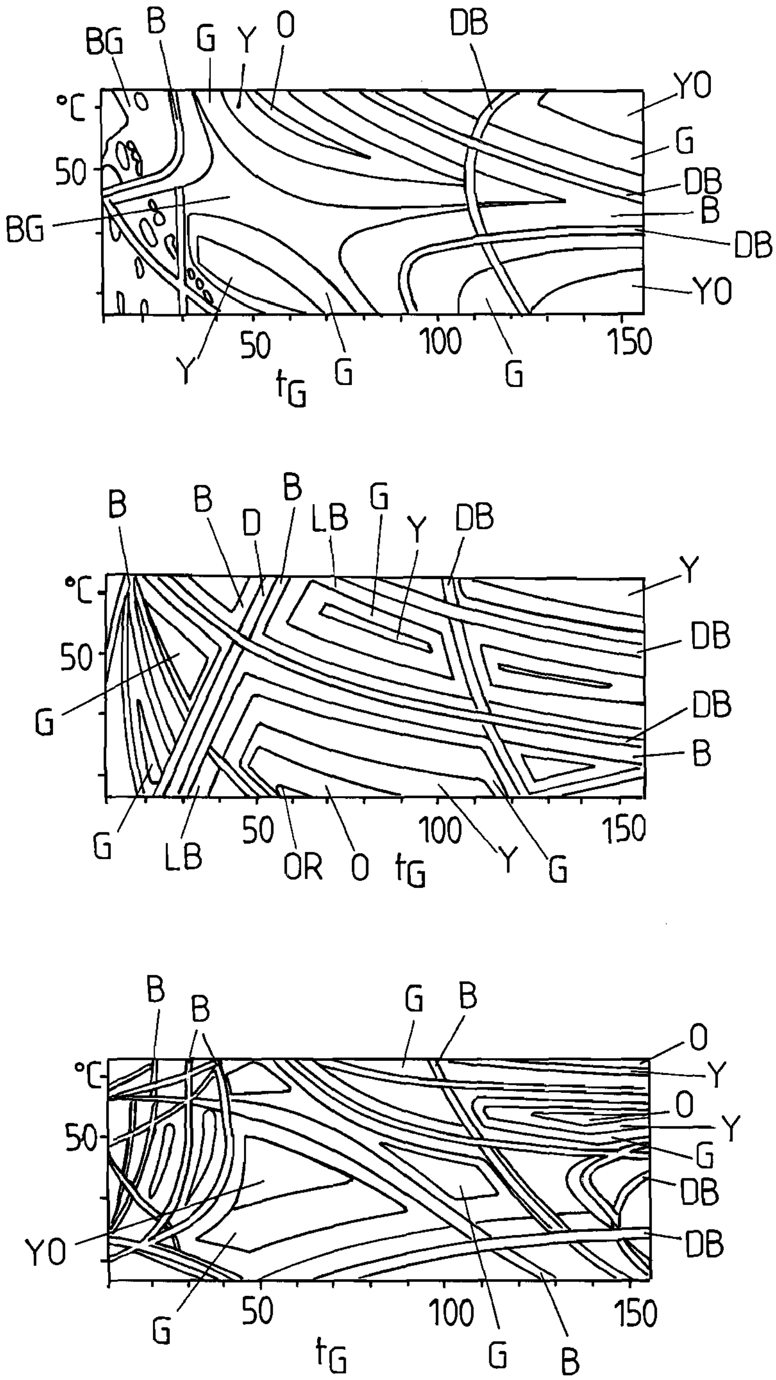
BG
B
G
Y
O
DB
°C
50
YO
G
DB
B
BG
DB
YO
50
100
150
Y
tG
G
G
B
B
D
B
LB
G
Y
DB
°C
50
Y
DB
G
DB
B
G
LB
50
OR
O
tG
100
Y
G
150
B
B
G
B
O
°C
Y
O
50
Y
G
DB
YO
DB
G
50
100
150
tG
G
B

FIG 7B

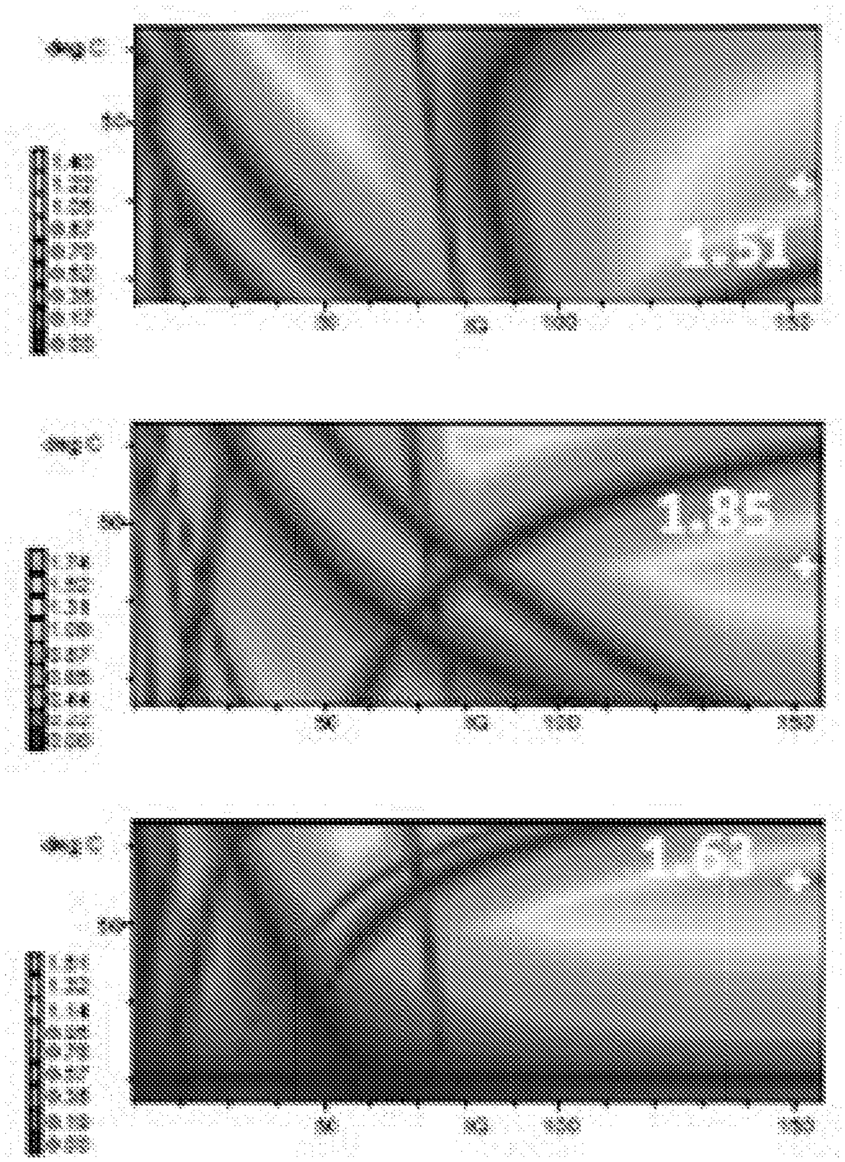


FIG. 7C

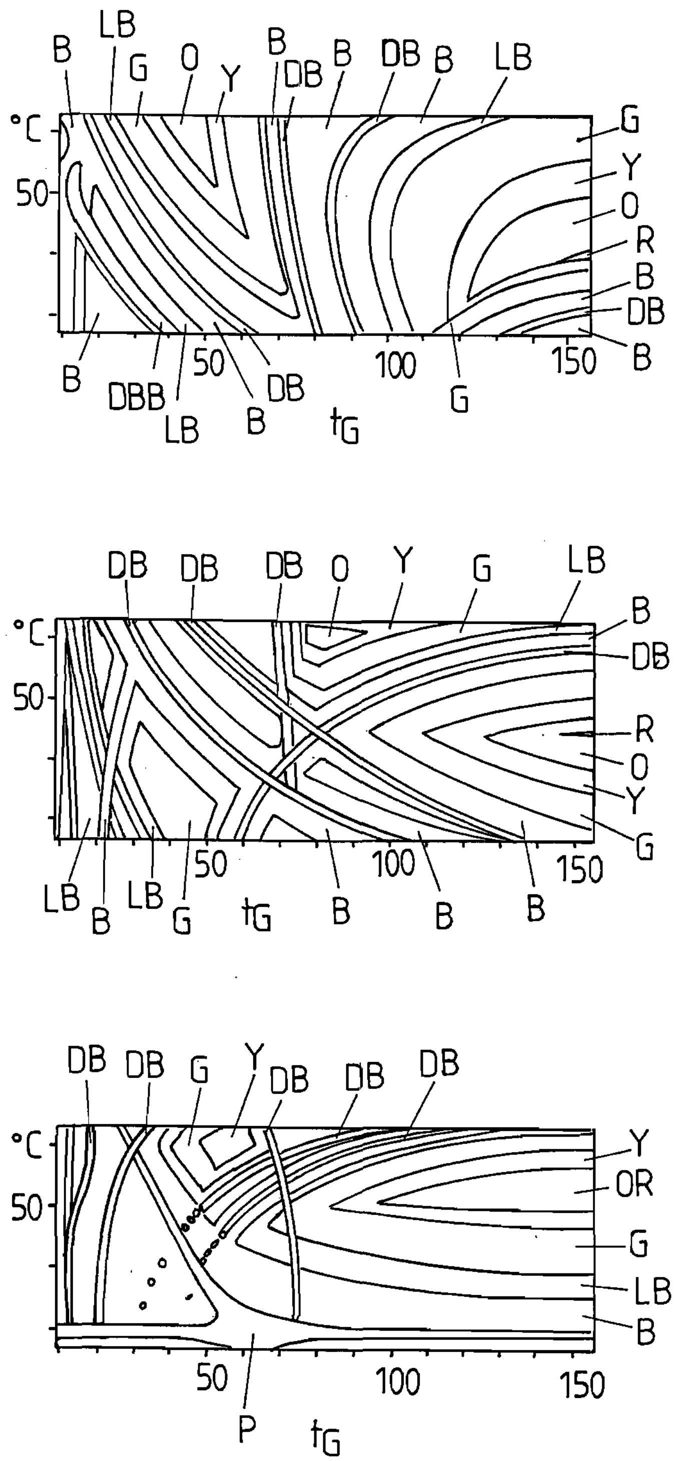
B LB G O Y B DB B DB B LB
°C
50
G
Y
O
R
B
DB
B
B DBB LB 50 B DB 100 G 150
tG
DB DB DB O Y G LB
°C
50
B
DB
R
O
Y
G
LB B LB G 50 tG B 100 B B 150
DB DB G Y DB DB DB
°C
50
Y
OR
G
LB
B
50 100 150
P
tG

FIG 7D

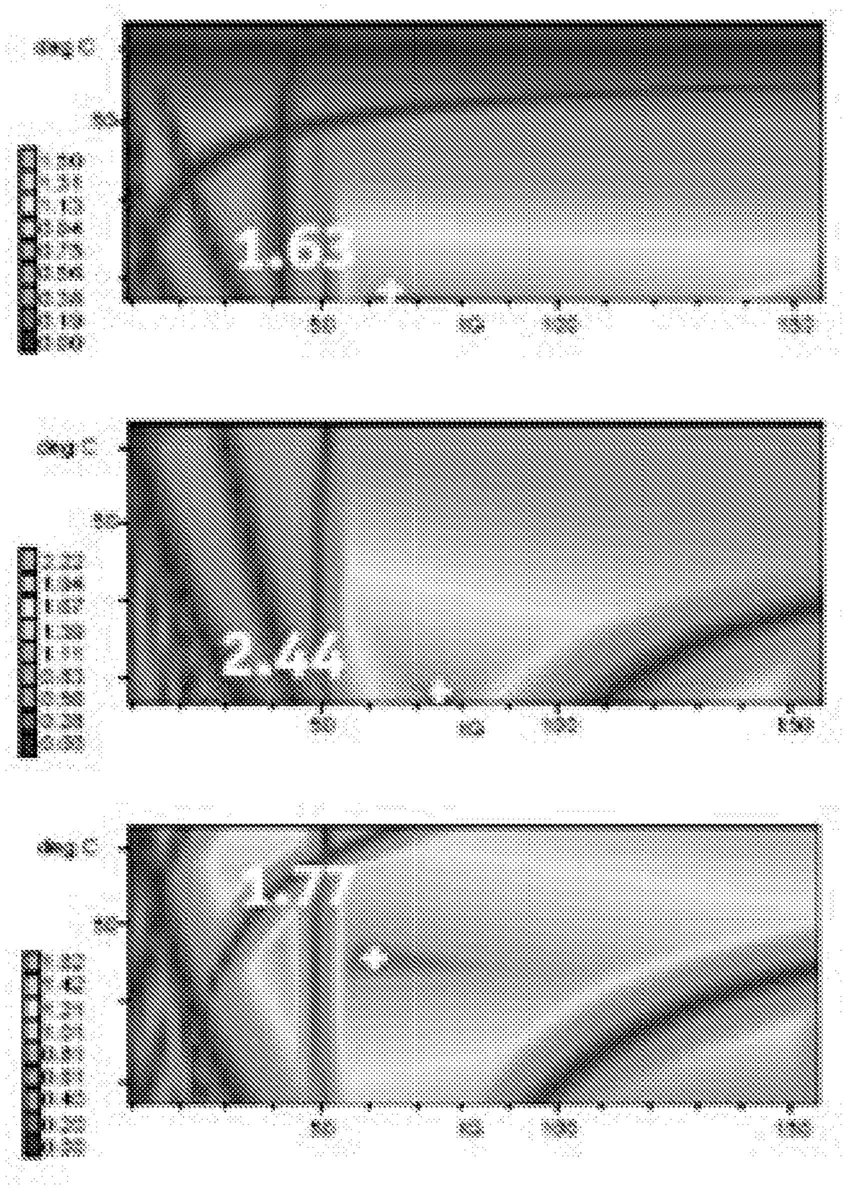


FIG. 7E

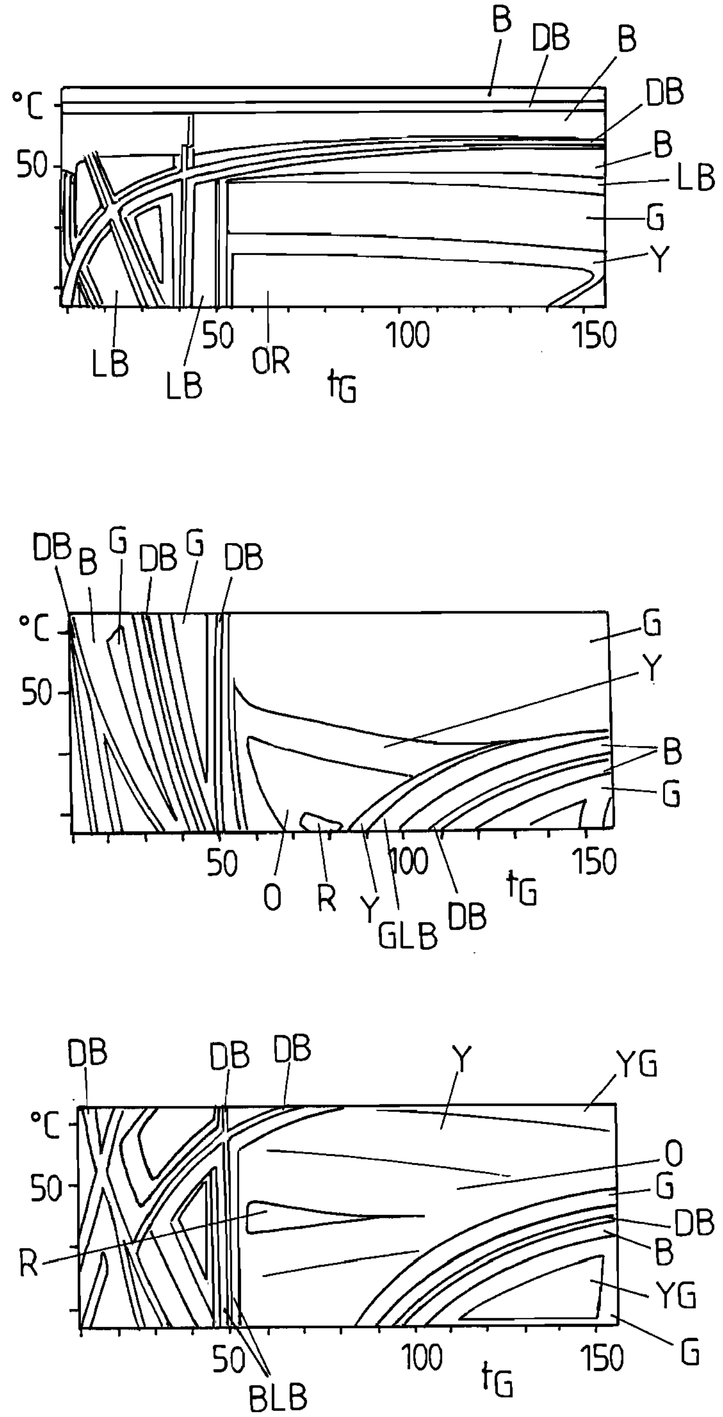
B
DB
B
DB
B
LB
G
Y
°C
50
LB
LB
50
OR
100
150
tG
DB
B
G
DB
G
DB
G
Y
B
G
°C
50
50
O
R
Y
GLB
100
DB
tG
150
DB
DB
DB
Y
YG
O
G
DB
B
YG
G
°C
50
R
50
BLB
100
tG
150

FIG 7F

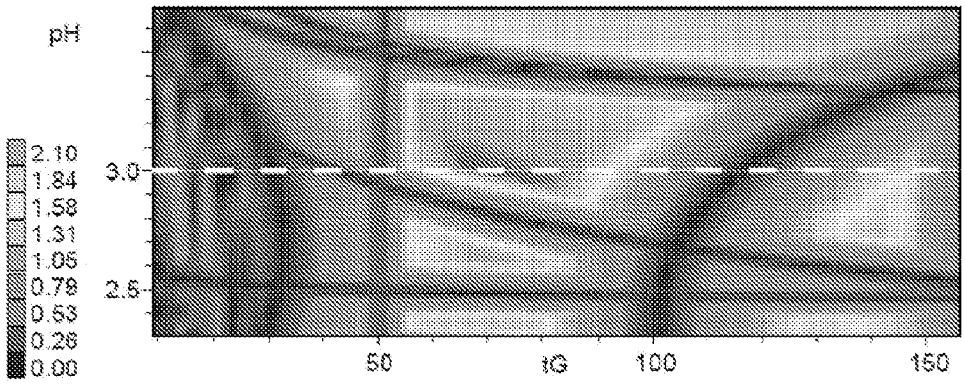


FIG. 8A

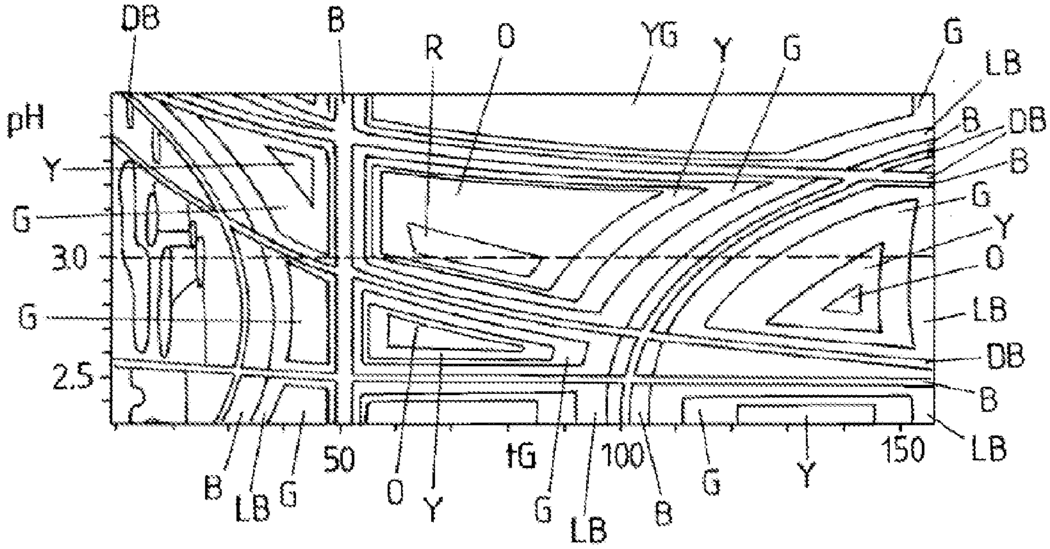


FIG. 8B

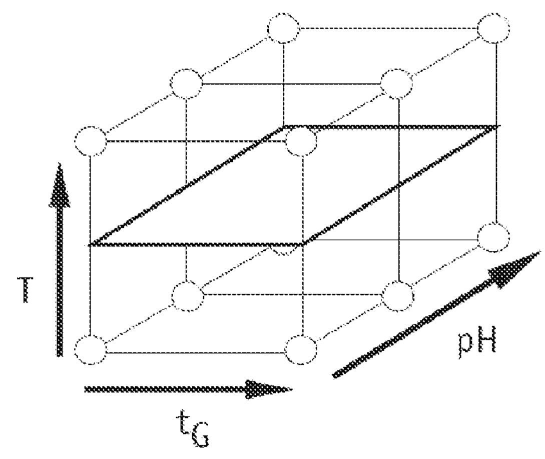


FIG. 9

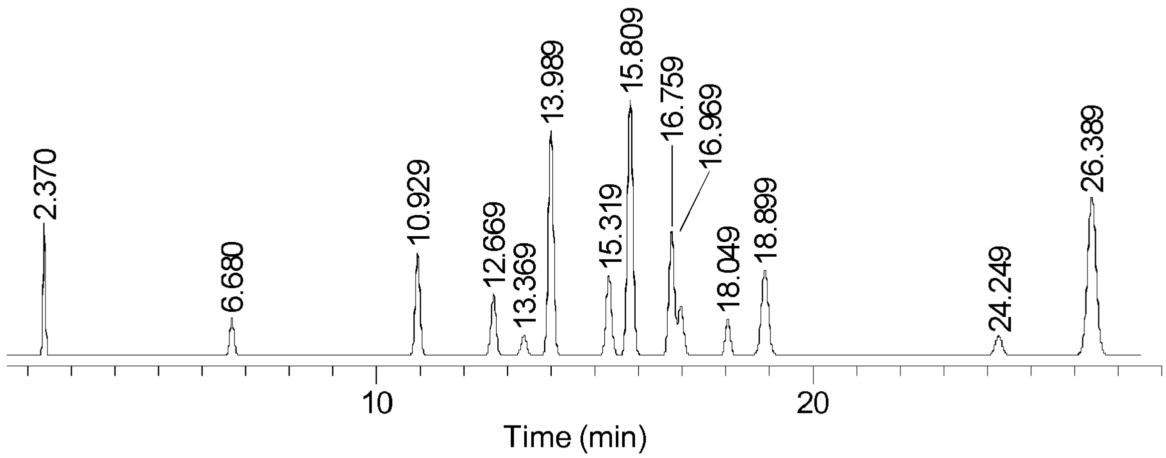


FIG. 10A

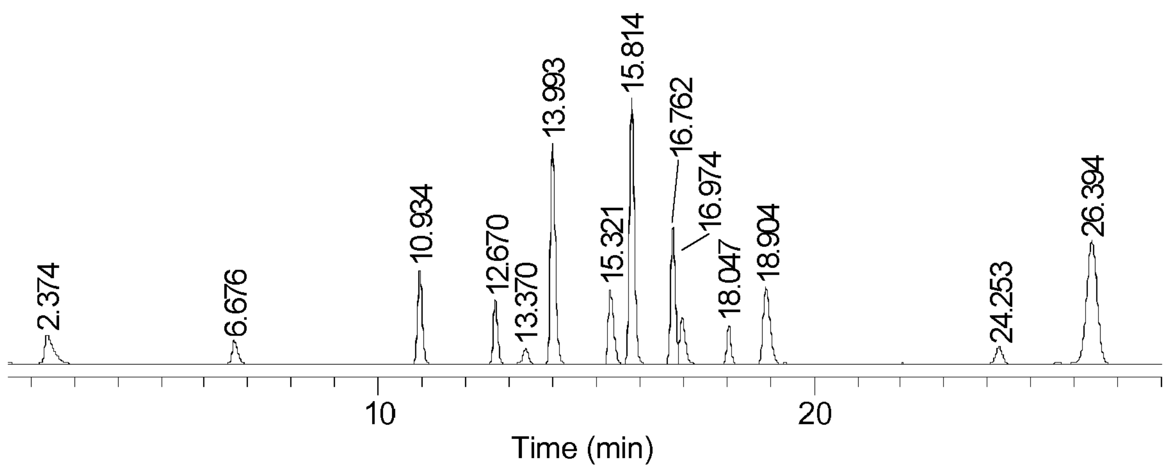


FIG. 10B

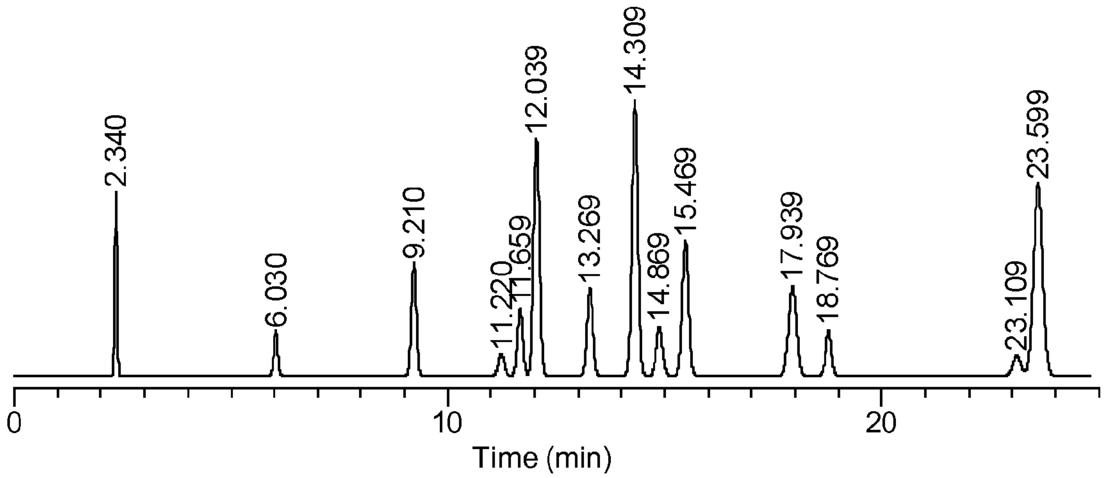


FIG. 11A

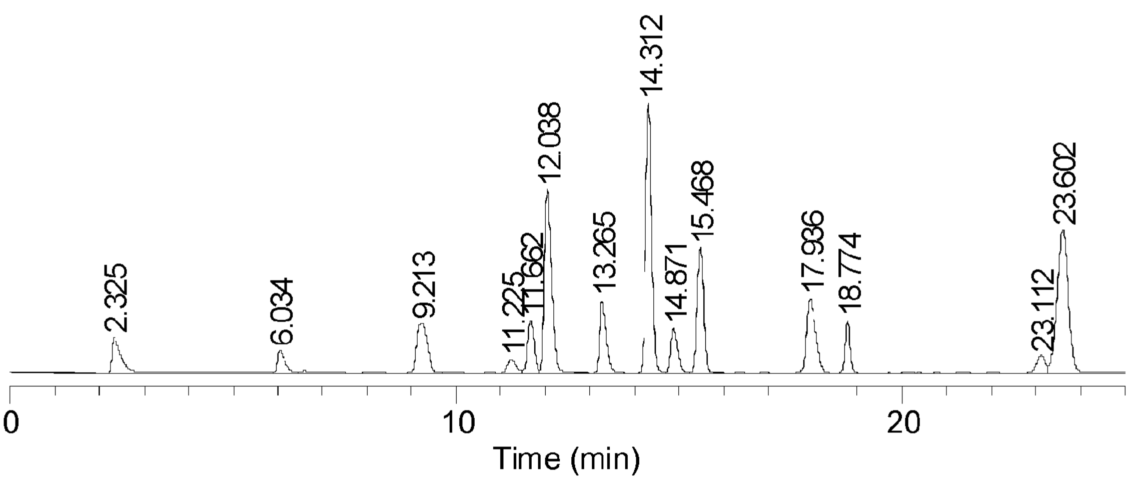


FIG. 11B

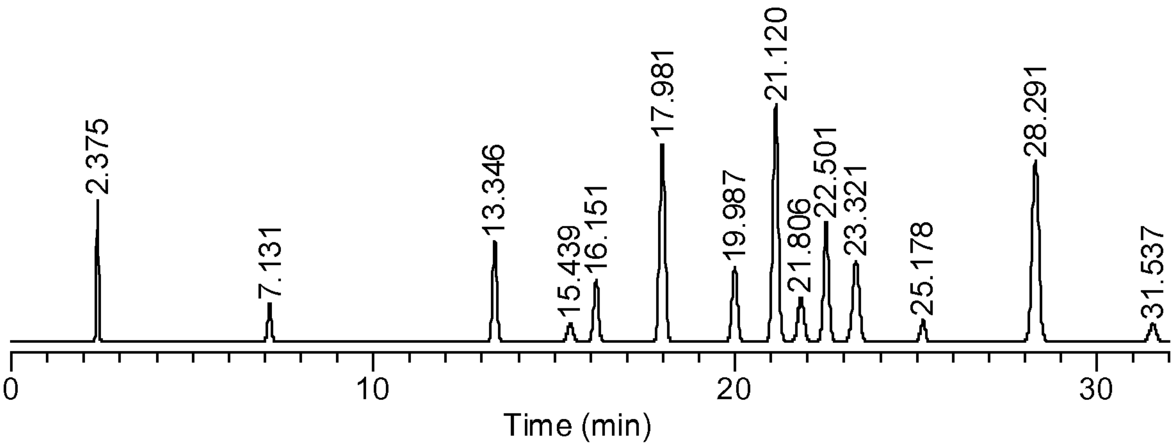


FIG. 12A

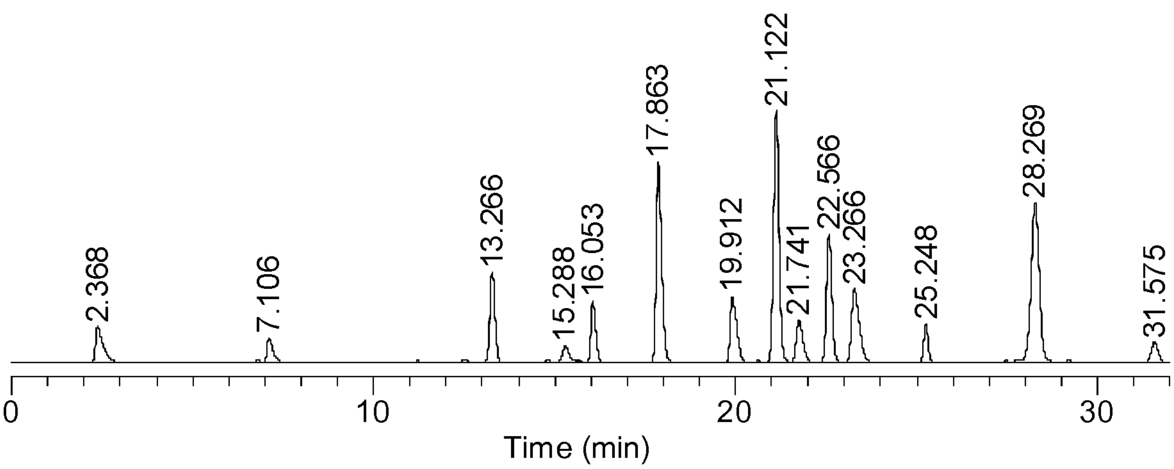


FIG. 12B

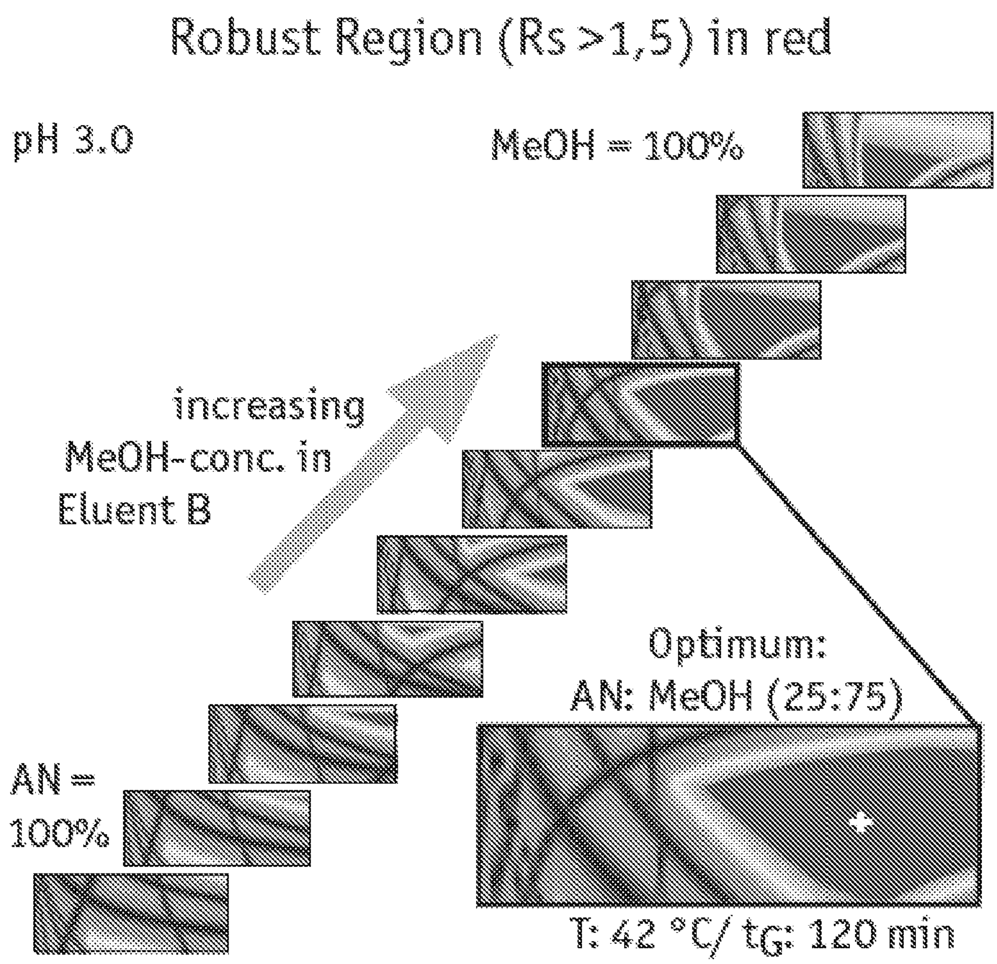
Robust Region (Rs >1,5) in red
pH 3.0
MeOH = 100%
increasing
MeOH-conc. in
Eluent B
Optimum:
AN: MeOH (25:75)
AN =
100%
T: 42 °C/ tG: 120 min

FIG. 13A

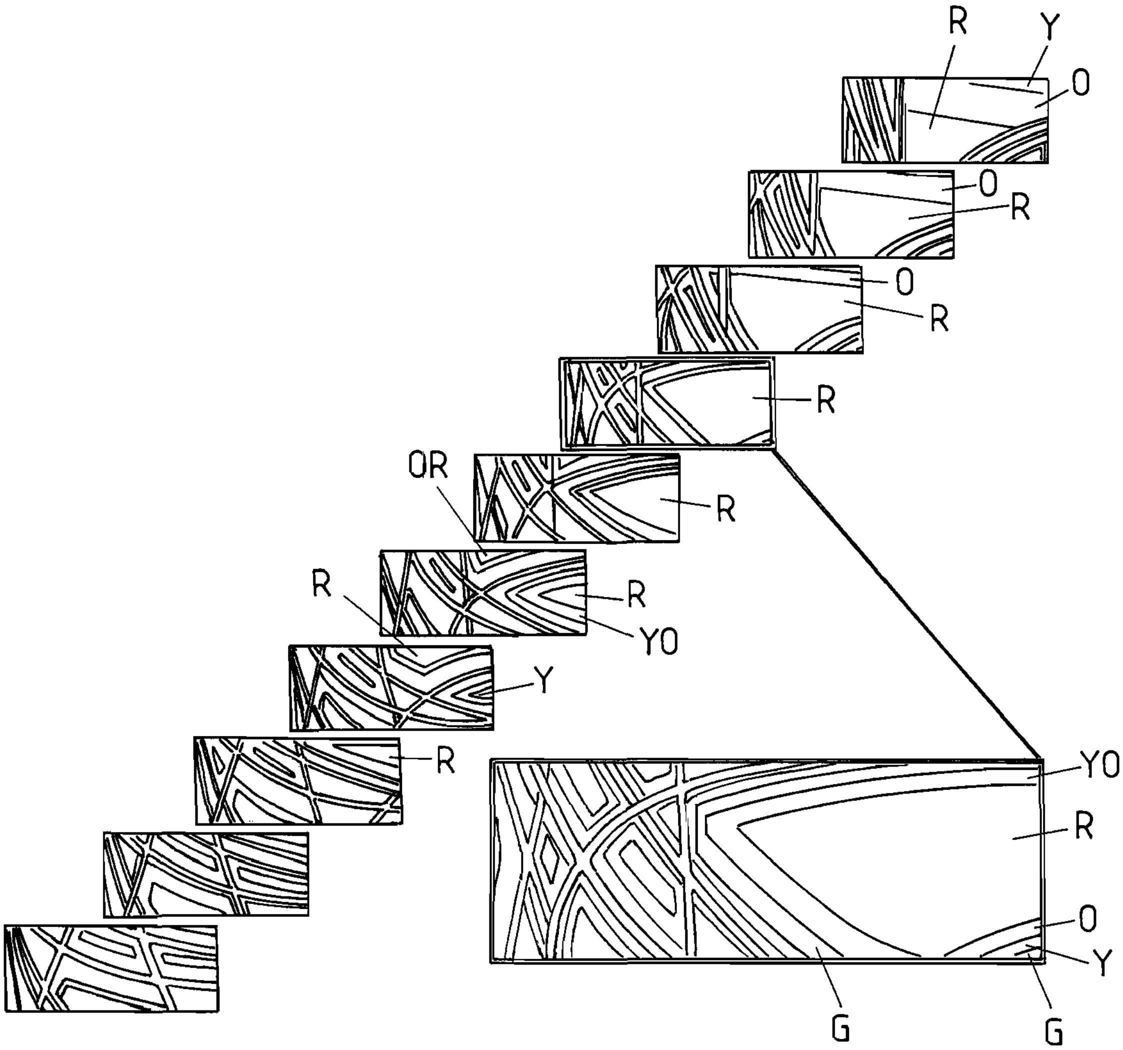


FIG 13B

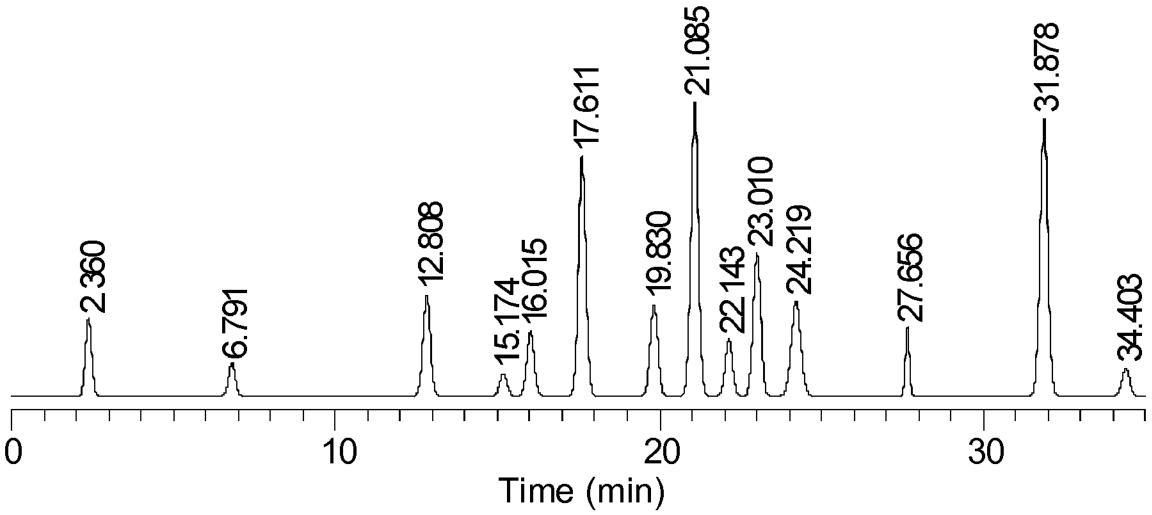


FIG. 14A

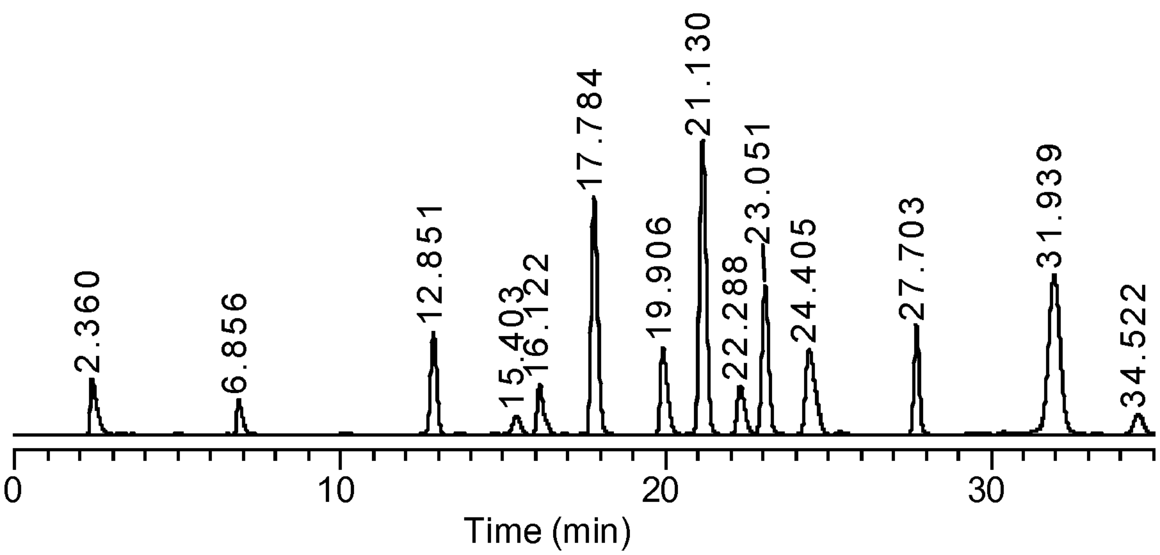


FIG. 14B

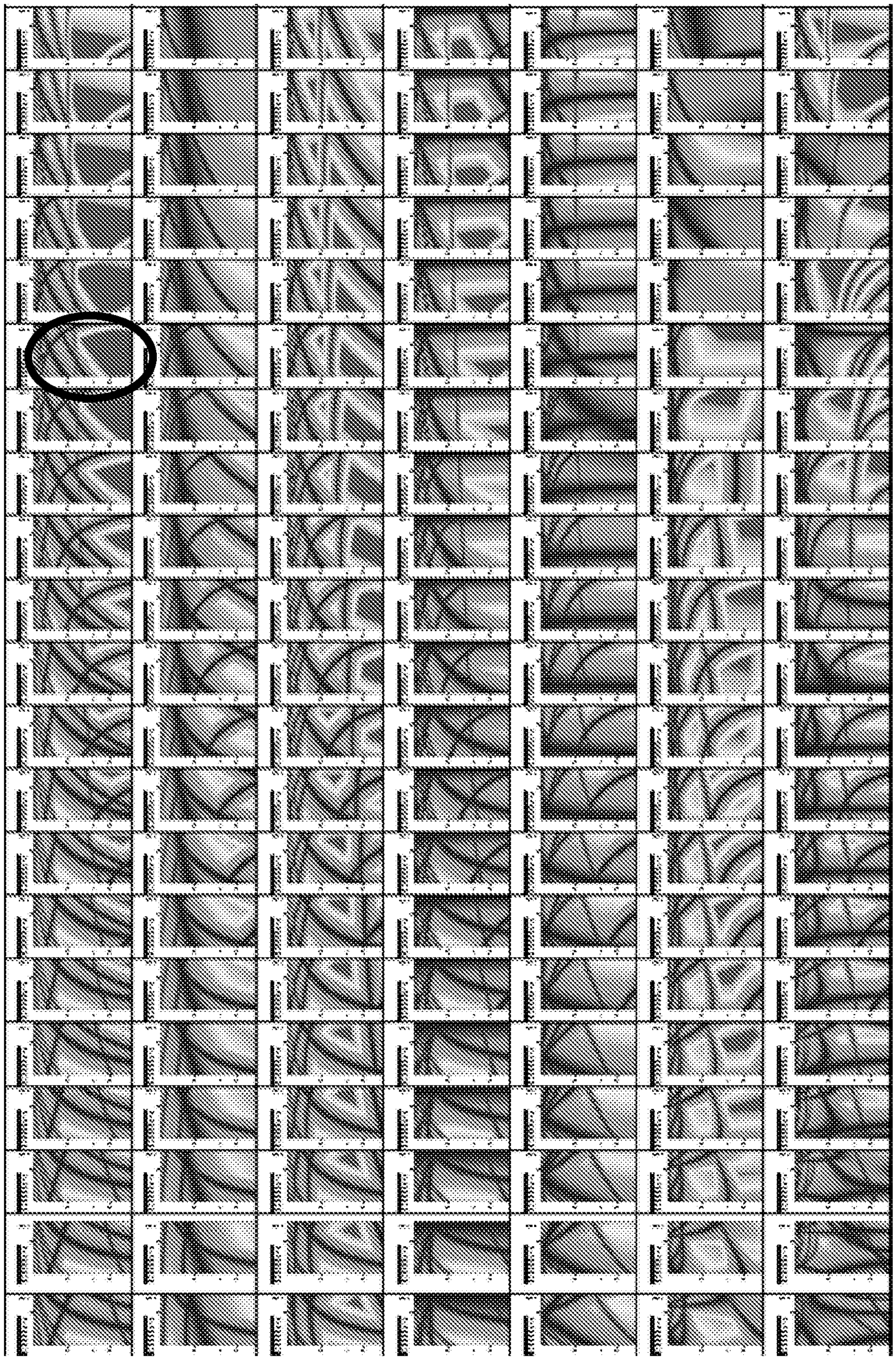

FIG. 15

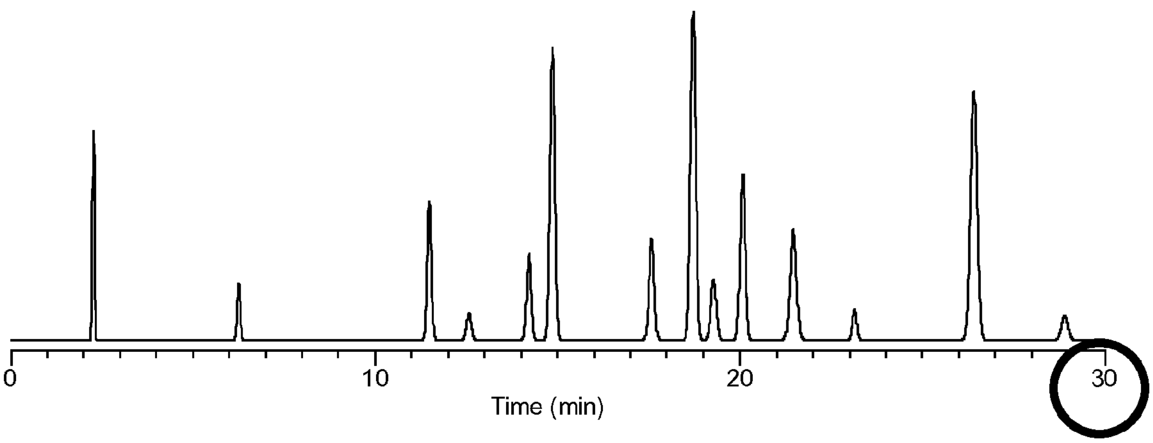


FIG. 16A

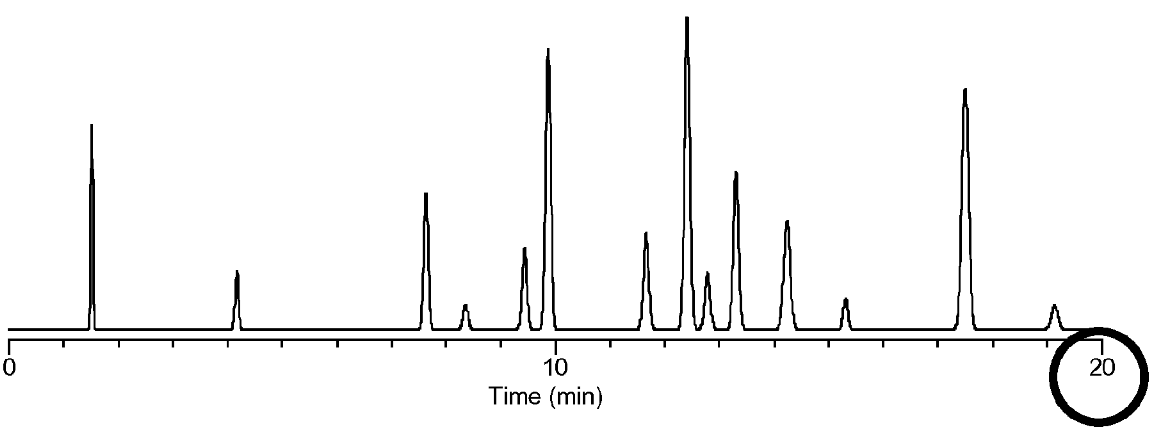


FIG. 16B

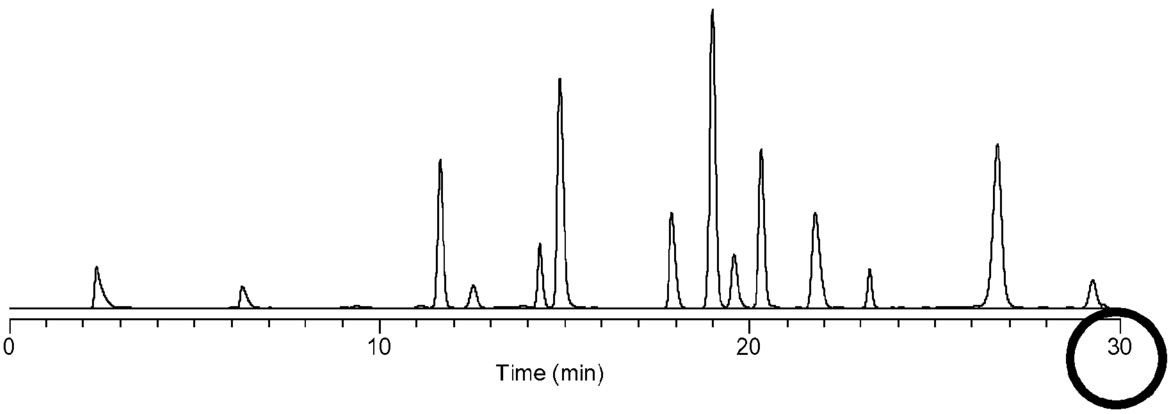


FIG. 17A

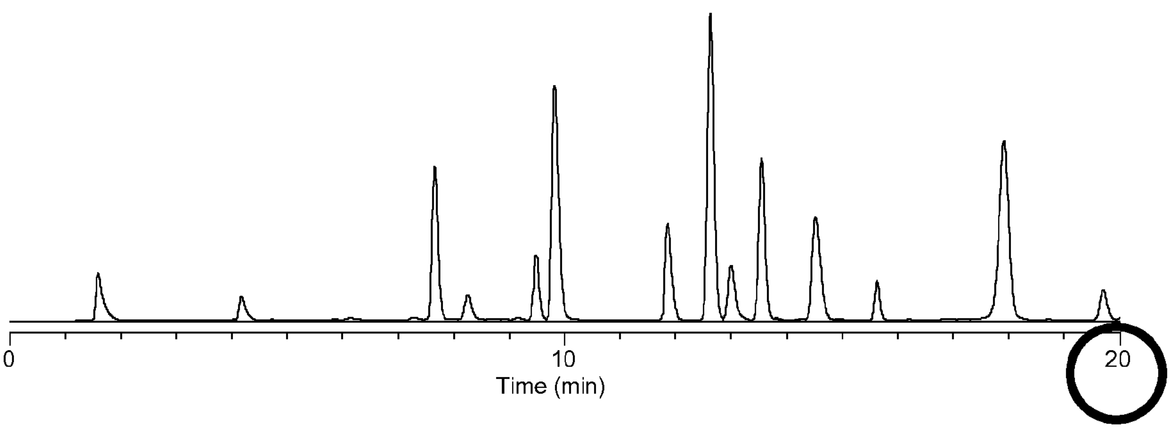


FIG. 17B

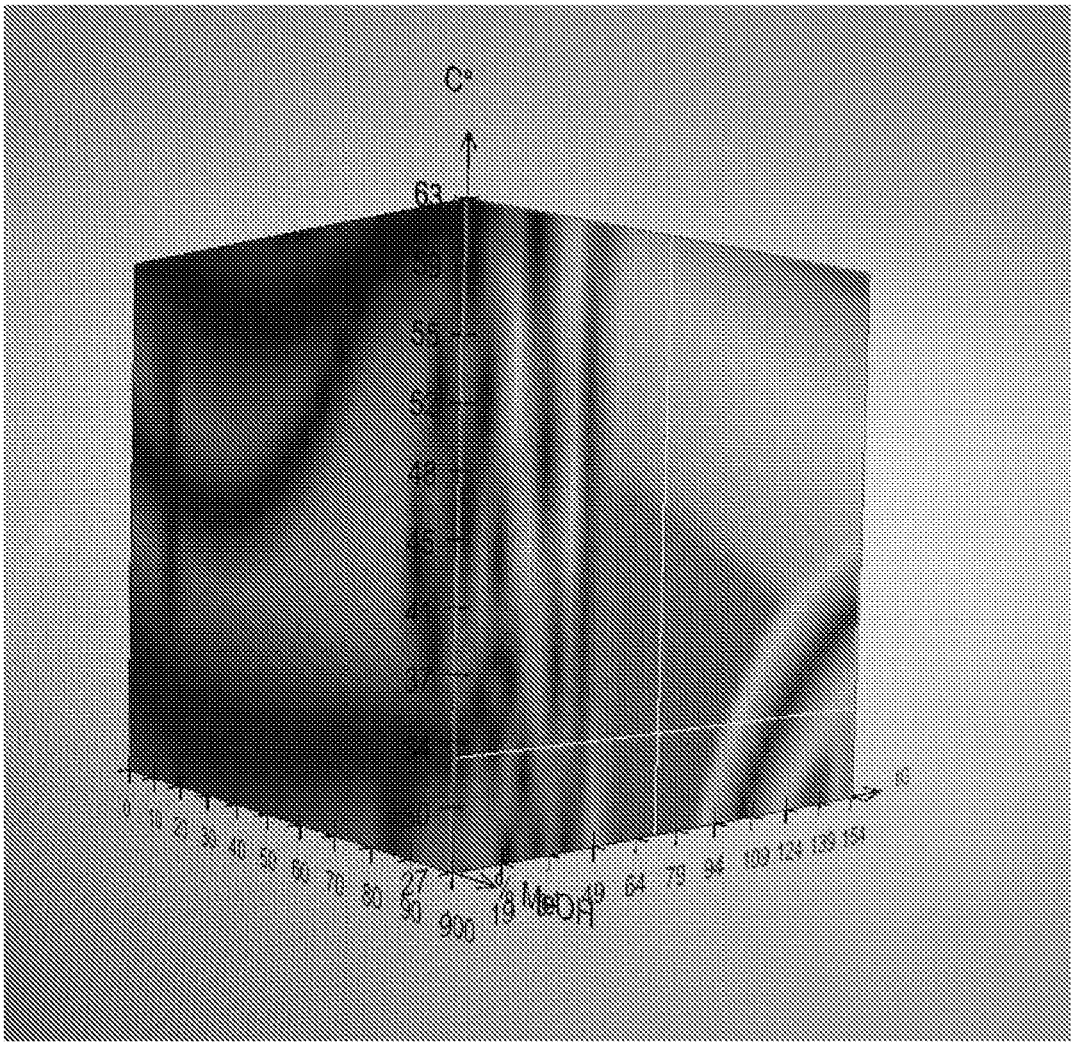

FIG. 18A

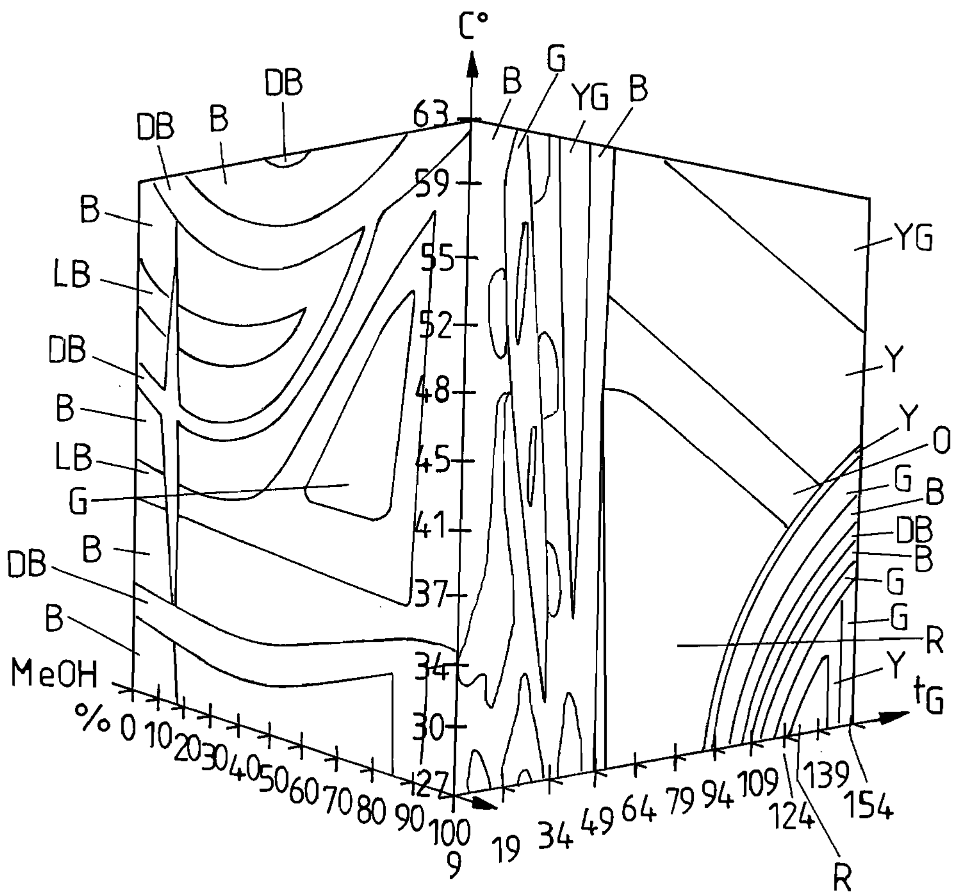
C°
63
59
55
52
48
45
41
37
34
30
27
MeOH
%
0 10 20 30 40 50 60 70 80 90 100
9 19 34 49 64 79 94 109 124 139 154
tG
DB
B
DB
B
LB
DB
B
LB
G
B
DB
B
G
YG
B
YG
Y
Y
O
G
B
DB
B
G
G
R
Y
R

FIG 18B

Europäisches Patentamt
European Patent Office
Office européen des brevets

# EUROPEAN SEARCH REPORT

Application Number
EP 09 17 9242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/77662 A2 (PROCTER & GAMBLE [US]) 18 October 2001 (2001-10-18)<br>* page 1, line 12 - line 17 *<br>* page 3, line 21 - page 4, line 19 *<br>* page 7, line 6 - line 20 *<br>* page 8, line 22 - page 9, line 5; figure 2 *<br>* page 10, line 5 - line 15 *<br>* page 11, line 4 - line 28 *<br>* page 15, line 1 - page 20, line 28 *<br>* page 21, line 30 - page 22, line 1 *<br>* page 23, line 16 - page 25, line 24 *<br>* page 2, line 16 - line 19 *<br>----- | 1-13 | INV.<br>G01N30/86<br>G01N27/447 |
| X | FELHOFER J ET AL: "Univariate and multivariate optimization of the separation conditions for the analysis of five bisphenols by micellar electrokinetic chromatography"<br>TALANTA, ELSEVIER, AMSTERDAM, NL,<br>vol. 77, no. 3,<br>15 January 2009 (2009-01-15), pages 1172-1178, XP025760522<br>ISSN: 0039-9140<br>[retrieved on 2008-08-30]<br>* abstract *<br>* page 1173, column 1, paragraph 2 *<br>* page 1174, column 1, last paragraph - page 1175, paragraph 1 *<br>* page 1176, column 2, last paragraph - page 1177, column 2, paragraph 2 *<br>* figures 4,5; table 2 *<br>-----<br>-/-- | 1-11 | TECHNICAL FIELDS SEARCHED (IPC)<br>G01N |

The present search report has been drawn up for all claims

| Place of search | Date of completion of the search | Examiner |
|---|---|---|
| Munich | 25 February 2010 | Dedman, Emma |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 17 9242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHESTER ET AL: "A virtual-modeling and multivariate-optimization examination of HPLC parameter interactions and opportunities for saving analysis time" JOURNAL OF CHROMATOGRAPHY, ELSEVIER SCIENCE PUBLISHERS B.V, NL, vol. 1096, no. 1-2, 25 November 2005 (2005-11-25), pages 16-27, XP005173661 ISSN: 0021-9673 * the whole document * ----- | 1-11 | |
| X | EP 0 393 776 A2 (PHILIPS ELECTRONICS UK LTD [GB]; PHILIPS NV [NL] PHILIPS ELECTRONICS U) 24 October 1990 (1990-10-24) * figures 3,4 * * column 8, line 6 - column 9, line 40 * ----- | 1,11 | |
| A,D | WO 2005/121776 A1 (MOLNAR IMRE [DE]; RIEGER H J [DE]; FERNANDEZ DE SOUZA DIMAS [AT]; ALBR) 22 December 2005 (2005-12-22) * the whole document * ----- | 1-13 | TECHNICAL FIELDS SEARCHED (IPC) |
| A | JOHNS K. F., BREADMORE M. C., BRUNO R. AND P. R. HADDAD: "Evaluation of Peakmaster for computer-aided multivariate optimisation of a CE separation of 17 antipsychotic drugs using minimal experiemental data" ELECTROPHORESIS, vol. 30, no. 5, 3 March 2009 (2009-03-03), pages 839-847, XP002570433 * abstract * * page 842, column 2, last paragraph - page 844, column 2, paragraph 1 * * figures 2,3 * ----- -/-- | 1-13 | |

The present search report has been drawn up for all claims

| Place of search | Date of completion of the search | Examiner |
|---|---|---|
| Munich | 25 February 2010 | Dedman, Emma |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 17 9242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JANDERA P: "Simultaneous optimisation of gradient time, gradient shape and initial composition of the mobile phase in the high-performance liquid chromatography of homologous and oligomeric series" JOURNAL OF CHROMATOGRAPHY, ELSEVIER SCIENCE PUBLISHERS B.V, NL, vol. 845, no. 1-2, 11 June 1999 (1999-06-11), pages 133-144, XP004170346 ISSN: 0021-9673 * abstract * ----- | 1,11 | |
| A | RIEGER H J ET AL: "Advanced high-performance liquid chromatography method development - Discovering unexpected choices in chromatography" JOURNAL OF CHROMATOGRAPHY, ELSEVIER SCIENCE PUBLISHERS B.V, NL, vol. 948, no. 1-2, 1 March 2002 (2002-03-01), pages 43-49, XP004339486 ISSN: 0021-9673 * the whole document * ----- | 1-13 | TECHNICAL FIELDS SEARCHED (IPC) |

The present search report has been drawn up for all claims

2

| Place of search | Date of completion of the search | Examiner |
|---|---|---|
| Munich | 25 February 2010 | Dedman, Emma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 17 9242

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2010

| Patent document cited in search report | Publication date | Patent family member(s) | Publication date |
|---|---|---|---|
| WO 0177662 A2 | 18-10-2001 | AU 5525401 A | 23-10-2001 |
| | | CA 2402155 A1 | 18-10-2001 |
| | | EP 1295116 A2 | 26-03-2003 |
| | | JP 2003530572 T | 14-10-2003 |
| | | US 2002010566 A1 | 24-01-2002 |
| EP 0393776 A2 | 24-10-1990 | AU 639918 B2 | 12-08-1993 |
| | | AU 5367690 A | 25-10-1990 |
| | | DE 69023263 D1 | 07-12-1995 |
| | | DE 69023263 T2 | 05-06-1996 |
| | | GB 2230967 A | 07-11-1990 |
| | | JP 2300660 A | 12-12-1990 |
| WO 2005121776 A1 | 22-12-2005 | DE 112005001959 A5 | 26-06-2008 |
| | | EP 1754055 A1 | 21-02-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005121776 A1


### Non-patent literature cited in the description


- **Horvath C. ; Melander W. ; Molnar I.** Solvophobic interactions in liquid chromatography with nonpolar stationary phases. *J Chromatogr.,* 1976, vol. 125 (1), 129-156